(19) Europäisches Patentamt
European Patent Office
Office européen des brevets

(11) **EP 4 412 191 A1**

(12) **EUROPEAN PATENT APPLICATION**

(43) Date of publication:
**07.08.2024 Bulletin 2024/32**

(21) Application number: **24153843.8**

(22) Date of filing: **25.01.2024**

(51) International Patent Classification (IPC):
**H04N 1/00** (2006.01)          **G06T 3/4038** (2024.01)

(52) Cooperative Patent Classification (CPC):
**H04N 1/00347; G06T 3/4038**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 JP 2023012415**

(71) Applicant: **Ricoh Company, Ltd.**
**Tokyo 143-8555 (JP)**

(72) Inventors:
• **Odamaki, Makoto**
  **143-8555 Tokyo (JP)**
• **Torikoshi, Makoto**
  **143-8555 Tokyo (JP)**

(74) Representative: **SSM Sandmair**
**Patentanwälte Rechtsanwalt**
**Partnerschaft mbB**
**Joseph-Wild-Straße 20**
**81829 München (DE)**

(54) **INFORMATION PROCESSING APPARATUS, INFORMATION PROCESSING SYSTEM, AND INFORMATION PROCESSING METHOD**

(57)    An information processing apparatus includes: reception means (51) configured to receive a processed image transmitted from a source apparatus (10, 90), the processed image being obtained by performing first image processing on a captured image of a subject, the first image processing being based on image-processing setting information; and image processing means (57) configured to perform second image processing on the processed image, the second image processing being based on the image-processing setting information.

## FIG. 1

EP 4 412 191 A1

## Description

BACKGROUND

Technical Field

The present disclosure relates to an information processing apparatus, an information processing system, and an information processing method,.

Related Art

Japanese Patent No. 5846172 describes an image processing apparatus for detecting a joint position between a plurality of input images. The image processing apparatus includes a target image generation means for generating multiple target images from a first input image. Each of the multiple target images is to be searched for in a second input image. The image processing apparatus further includes a feature value calculation means for calculating a feature value for each of the multiple target images. The image processing apparatus further includes a joint position detection means for detecting, for a target image of interest among the multiple target images, a joint position of the target image of interest in the second input image, based on a joint position of another neighboring target image having a feature value larger than that of the target image of interest among the multiple target images.

SUMMARY

According to an embodiment of the present disclosure, an information processing apparatus includes reception means and image processing means. The reception means receives a processed image transmitted from a source apparatus. The processed image is obtained by performing first image processing on a captured image of a subject. The first image processing is based on image-processing setting information. The image processing means performs second image processing on the processed image. The second image processing is based on the image-processing setting information.

According to an embodiment of the present disclosure, an information processing apparatus includes image processing means and transmission means. The image processing means performs first image processing on a captured image of a subject to generate a processed image. The first image processing is based on image-processing setting information. The transmission means transmits the processed image to a destination apparatus. The first image processing is associated with second image processing to be performed on the processed image by the destination apparatus. The second image processing is based on the image-processing setting information.

According to an embodiment of the present disclosure, an information processing system includes the information processing apparatus described above and a source apparatus. The source apparatus communicates with the information processing apparatus. The source apparatus includes image processing means and transmission means. The image processing means performs first image processing on a captured image of a subject to generate a processed image. The first image processing is based on image-processing setting information. The transmission means transmits the processed image to the information processing apparatus.

According to an embodiment of the present disclosure, an information processing method is executed by an information processing apparatus. The information processing method includes receiving a processed image transmitted from a source apparatus, the processed image being obtained by performing first image processing on a captured image of a subject, the first image processing being based on image-processing setting information; and performing second image processing on the processed image, the second image processing being based on the image-processing setting information.

According to an embodiment of the present disclosure, an information processing method is executed by an information processing apparatus. The information processing method includes performing first image processing on a captured image of a subject to generate a processed image, the first image processing being based on image-processing setting information; and transmitting the processed image to a destination apparatus. The first image processing is associated with second image processing to be performed on the processed image by the destination apparatus. The second image processing is based on the image-processing setting information.

According to one or more embodiments of the present disclosure, a source apparatus from which an image is transmitted and a destination apparatus to which the image is transmitted can suitably perform image processing as appropriate.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

> FIG. 1 is a diagram illustrating an example general arrangement of an image processing system according to an embodiment of the present disclosure;
> FIG. 2 is an illustration of an example of a spherical image captured by an image capturing device according to the embodiment of the present disclosure;
> FIG. 3A is an illustration of a hemispherical image (front side) captured by the image capturing device according to the embodiment of the present disclosure;

FIG. 3B is an illustration of a hemispherical image (back side) captured by the image capturing device according to the embodiment of the present disclosure;

FIG. 3C is an illustration of an image in equirectangular projection according to the embodiment of the present disclosure;

FIG. 4A is a conceptual illustration of an example of how the image in equirectangular projection is mapped onto a surface of a sphere according to the embodiment of the present disclosure;

FIG. 4B is an illustration of a spherical image according to the embodiment of present disclosure;

FIG. 5 is a view illustrating positions of a virtual camera and a predetermined area in a case in which the spherical image is represented as a three-dimensional solid sphere according to the embodiment of present disclosure;

FIG. 6 is an illustration of a relationship between predetermined-area information and an image of the predetermined area according to the embodiment of the present disclosure;

FIG. 7 is an illustration of an example state of the image capturing device at the time of capturing an image according to the embodiment of the present disclosure;

FIGs. 8A and 8B are illustrations of examples of spherical images according to the embodiment of the present disclosure;

FIGs. 9A and 9B are illustrations of examples of planar images each converted from a spherical image according to the embodiment of the present disclosure;

FIGs. 10A and 10B are schematic views illustrating examples of image capturing devices applicable to the image processing system according to the embodiment of the present disclosure;

FIG. 11 is a block diagram illustrating an example hardware configuration of the image capturing device according to the embodiment of the present disclosure;

FIG. 12 is a block diagram illustrating an example hardware configuration of each of a server and a communication terminal according to the embodiment of the present disclosure;

FIG. 13 is a block diagram illustrating an example functional configuration of the image processing system according to the embodiment of the present disclosure;

FIG. 14 is an illustration of an example of a twin management table according to the embodiment of the present disclosure;

FIG. 15 is a sequence diagram illustrating an example of a twin registration process according to the embodiment of the present disclosure;

FIG. 16 is a flowchart illustrating an example of the twin registration process according to the embodiment of the present disclosure;

FIGs. 17A and 17B are illustrations of examples of setting information management tables according to the embodiment of the present disclosure;

FIG. 18 is a sequence diagram illustrating an example of a process according to the embodiment of the present disclosure;

FIG. 19 is a flowchart illustrating an example of image processing according to the embodiment of the present disclosure;

FIGs. 20A and 20B (FIG. 20) are diagrams illustrating mapping of two partial images captured by two fish-eye lenses to a spherical coordinate system in position detection processing according to the embodiment of the present disclosure;

FIGs. 21A and 21B (FIG. 21) are diagrams illustrating mapping of the two partial images captured by the two fish-eye lenses to the spherical coordinate system in image combining processing according to the embodiment of the present disclosure;

FIGs. 22A and 22B are illustrations of examples of setting information management tables according to a first modification of the embodiment of the present disclosure;

FIG. 23 is a sequence diagram illustrating an example of a process according to the first modification of the embodiment of the present disclosure;

FIGs. 24A and 24B are illustrations of examples of setting information management tables according to a second modification of the embodiment of the present disclosure;

FIG. 25 is a sequence diagram illustrating an example of a process according to the second modification of the embodiment of the present disclosure;

FIGs. 26A, 26B, and 26C are illustrations of examples of setting information management tables according to a third modification of the embodiment of the present disclosure;

FIG. 27 is a sequence diagram illustrating an example of a process according to the third modification of the embodiment of the present disclosure;

FIGs. 28A, 28B, and 28C are illustrations of examples of setting information management tables according to a fourth modification of the embodiment of the present disclosure;

FIGs. 29A, 29B, and 29C are illustrations of examples of setting information management tables according to a fifth modification of the embodiment of the present disclosure; and

FIG. 30 is a sequence diagram illustrating an example of a process according to the fifth modification of the embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure will be described with reference to the drawings. In the drawings, the same elements are denoted by the same reference numerals, and redundant descriptions thereof will be omitted.

Overview of Image Processing System

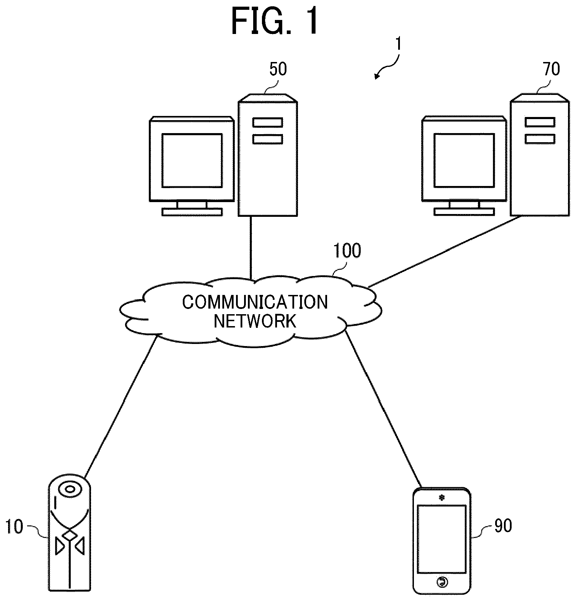

FIG. 1 is a diagram illustrating an example general arrangement of an image processing system according to an embodiment of the present disclosure. An image processing system 1 illustrated in FIG. 1 is an example of an information processing system. The image processing system 1 is a system that performs image processing on a captured image of an interior space of a structure such as a real estate property or a building or a structure in a field such as construction or civil engineering to make the captured image viewable online to viewers.

As illustrated in FIG. 1, the image processing system 1 includes an image capturing device 10, a server 50, and a communication terminal 90, and is connectable to an external server 70. In one embodiment, the server 50 and the communication terminal 90 in the image processing system 1 communicates with each other via a communication network 100. In one embodiment, the server 50 communicates with the external server 70 via the communication network 100. In one embodiment, the image capturing device 10 communicates with the communication terminal 90 via short-range wireless communication such as Wireless Fidelity (Wi-Fi®). In another embodiment, the image capturing device 10 communicates with the server 50 and the communication terminal 90 via the communication network 100. The communication network 100 includes the Internet, a mobile communication network, and a local area network (LAN), for example. The communication network 100 may include a wired communication network and a wireless communication network. The wireless communication network may be based on a wireless communication standard such as third generation (3G), fourth generation (4G), fifth generation (5G), Wi-Fi®, Worldwide Interoperability for Microwave Access (WiMAX), or Long Term Evolution (LTE).

The server 50 is an example of an information processing apparatus and a destination apparatus. The server 50 is a server computer that performs image processing on a captured image of an interior space of a structure such as a real estate property or a building, which is a predetermined site, or a structure in a field such as construction or civil engineering. The server 50 obtains an image captured by the image capturing device 10 and generates a tour image by using the obtained captured image to provide a virtual tour to a user, for example. The virtual tour is content that allows a user to view a real estate property as if the user were actually viewing the real estate property on the site, for example. The tour image is generated by using a plurality of images captured by the image capturing device 10. The tour image is an image that is to be viewed by a user and that allows the user to virtually move in a site appearing in the captured images in accordance with the user's operation. Such a virtual tour is suitably carried out not only in an interior space of a structure such as a real estate property or a structure in a building site but also an external space of a structure for a location such as a tourist attraction or a theme park. In other words, an interior space of a structure can be regarded as being within a predetermined area. When a virtual tour is carried out in an external space of a structure, a map indicating an interior space of a structure such as a real estate property or a building, which will be described below, is replaced with a tourist attraction map for navigating a tourist attraction or an area map of a theme park, for example, to implement the present embodiment.

The server 50 may be implemented by a single server computer or may be implemented by a plurality of server computers. In the following description, the server 50 is a server computer residing on a cloud environment. In some embodiments, the server 50 may be a server residing on an on-premises environment.

The image capturing device 10 is an example of an information processing apparatus and a source apparatus. The image capturing device 10 is a special digital camera (spherical image capturing device) that can capture, in all directions, an image of a space where a structure such as a real estate property is present at an image capturing site to obtain a spherical image (360-degree image in both the circumferential direction and the vertical direction). The spherical image capturing device and the spherical image may also be referred to as an omnidirectional image capturing device and an omnidirectional image, respectively. The following description uses a structure such as a real estate property as an example. In another example, as described above, an interior space of a structure such as a building or a structure in a field such as construction or civil engineering may be used.

In one embodiment, the image capturing device 10 obtains the spherical image. In another embodiment, the spherical image may be obtained by the communication terminal 90 having a function of obtaining a spherical image. In another embodiment, a camera attachment for obtaining a spherical image may be connected to the communication terminal 90, and the communication terminal 90 and the camera attachment may be used to obtain the spherical image. In other words, the source apparatus is an apparatus from which the obtained spherical image is transmitted to the server 50.

The spherical image refers to an image having a so-called solid angle $4\pi$sr, where sr stands for steradian. Note that a spherical image, part of which is missing, is also referred to as a spherical image in the present specification for the sake of convenience. Examples of such an image include an image in which part of the spherical image in a direction directly above or below the spherical image capturing device is missing, an image in which part of the spherical image in a vertically upward direction or a vertically downward direction of the spherical image is missing, and an image in which part of a predetermined area of the spherical image is missing.

This is because of considering a use case in which a user does not carefully view a part that is immediately above or immediately below the subject captured in a spherical image when viewing the spherical image, for example. In such a case, it is also assumed that the spherical image itself is not displayed. Specifically, an imaging element and an optical system are designed not to capture an image of the part, no image is displayed, or a logo or other material is displaying on the part, for example.

The image capturing device 10 is used by, for example, a real estate agent that manages or sells real estate properties. The image capturing device 10 may be a wide-angle camera or a stereo camera that can obtain a wide-angle image having an angle of view equal to or greater than a predetermined value. The wide-angle image is typically an image taken with a wide-angle lens, such as a lens that can take an image of a range wider than a range that the human eyes can perceive. In other words, the image capturing device 10 is an image capturing means that can obtain an image (a spherical image or a wide-angle image) captured using a lens having a focal length shorter than a predetermined value. The wide-angle image is typically an image taken with a lens having a focal length of 35 mm or less in terms of 35 mm film. The image capturing function of the image capturing device 10 may have a panoramic image capturing function, and the image capturing device 10 may capture a panoramic image.

The communication terminal 90 is an example of an information processing apparatus and a source apparatus and is a computer such as a tablet terminal. The communication terminal 90 is used by, for example, the same real estate agent as that uses the image capturing device 10. In one example, the communication terminal 90 is installed with a dedicated application for instructing the image capturing device 10 to capture an image and viewing an image provided from the server 50. In another example, the communication terminal 90 does not include the dedicated application and accesses a dedicated website by using a web browser to instruct the image capturing device 10 to capture an image and allow a user to view an image. An additional or a different communication terminal 90 may instruct the image capturing device 10 to capture an image and allow a user to view an image.

The communication terminal 90 is not limited to a tablet terminal and may be, for example, a personal computer (PC), a smartphone, a wearable terminal, a head mount display (HMD), or an Interactive White Board (IWB), which is an electronic whiteboard with mutual communication capability, for example.

Overview of Image Capturing Device

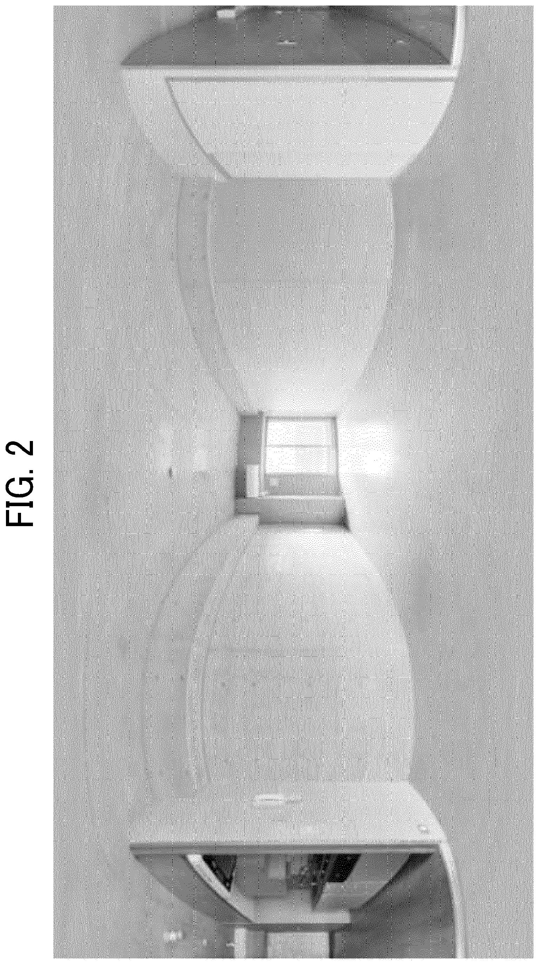

An overview of the image capturing device 10 in the image processing system 1 will be described with reference to FIGs. 2 to 11. FIG. 2 is an illustration of an example of a spherical image captured by the image capturing device 10. The image illustrated in FIG. 2 is a spherical image of a room of a real estate property, which is an example of an interior space of a structure, and is captured by the image capturing device 10. The spherical image is suitable for, for example, viewing a real estate property because in the spherical image, the inside of a room can be captured in all directions. The spherical image has various forms. In one example, the spherical image is typically generated by equirectangular projection, which will be described below. An image generated by equirectangular projection has an advantage that the outer shape of the image is rectangular and the data of the image can be efficiently and easily stored. Another advantage of the image is that the image looks relatively natural because of a small amount of distortion around the equator and no distortion of straight lines in the vertical direction.

Method for Generating Spherical Image

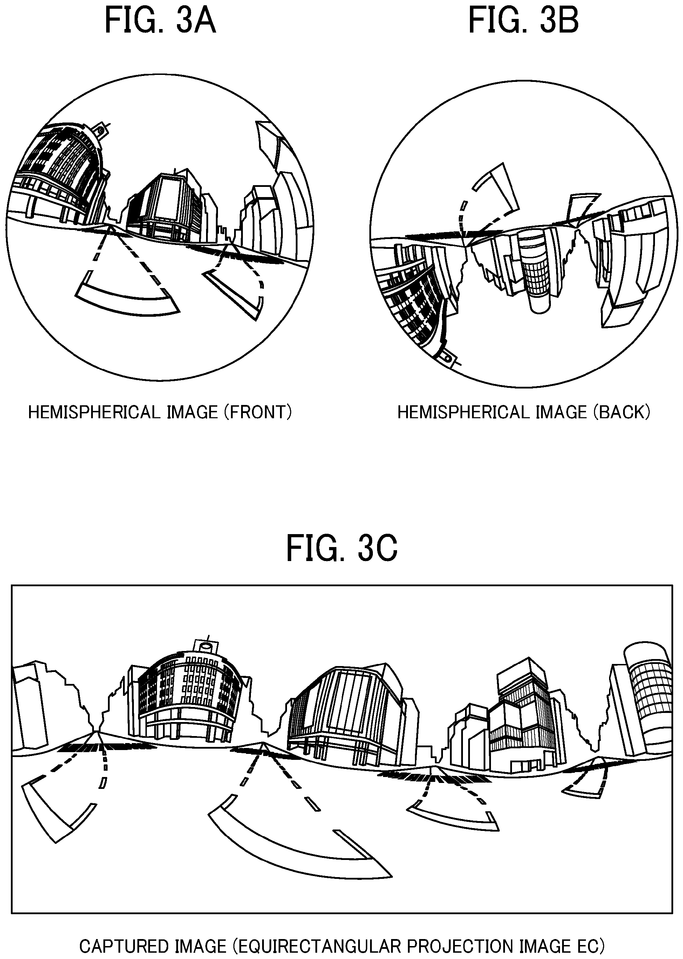

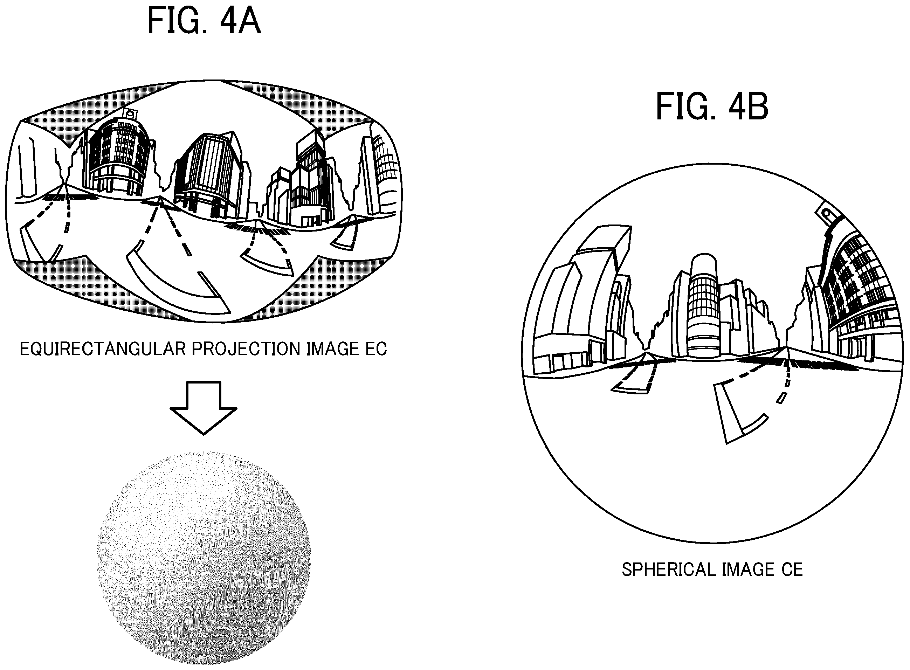

A method for generating a spherical image will be described with reference to FIGs. 3A to 9B. First, an overview of an operation of generating a spherical image from images captured by the image capturing device 10 will be described with reference to FIGs. 3A to 3C and FIGs. 4A and 4B. FIG. 3A illustrates a hemispherical image (front side) captured by the image capturing device 10. FIG. 3B illustrates a hemispherical image (back side) captured by the image capturing device 10. FIG. 3C illustrates an image in equirectangular projection, which is hereinafter referred to as an "equirectangular projection image" (or equidistant cylindrical projection image). FIG. 4A conceptually illustrates an example of how the equirectangular projection image is mapped onto a surface of a sphere. FIG. 4B illustrates a spherical image.

The image capturing device 10 is provided with an imaging element on each of a front surface (front side) and a rear surface (rear side) thereof. The imaging element (image sensor) on the front side of the image capturing device 10 and the imaging element (image sensor) on the rear side of the image capturing device 10 are used in combination with optical members each configured to capture a hemispherical image having an angle of view of 180 degrees or wider. Examples of the optical members include lenses. The two imaging elements are used to capture respective images of a subject around the user. As a result, the image capturing device 10 can obtain two hemispherical images.

As illustrated in FIGs. 3A and 3B, the images captured by the imaging elements of the image capturing device 10 are curved hemispherical images (front side and back side). The image capturing device 10 combines the hemispherical image (front side) and the hemispherical image (back side), which are flipped 180 degrees, to generate an equirectangular projection image EC as illustrated in FIG. 3C.

The image capturing device 10 uses Open Graphics Library for Embedded Systems (OpenGL ES) to map the equirectangular projection image EC onto the surface of a sphere to cover the surface of the sphere as illustrated in FIG. 4A, to generate a spherical image (spherical panoramic image) CE as illustrated in FIG. 4B. That is, the spherical image CE is represented as the equirectangular projection image EC, which corresponds to a surface facing the center of the sphere. OpenGL ES is a graphics library used for visualizing two-dimensional (2D) data and three-dimensional (3D) data. The spherical image CE may be either a still image or a moving image. OpenGL ES is one example of a conversion method. Any other method may be used to obtain an equirectangular projection image from a hemispherical image. In another example, a calculation by a central processing unit (CPU) or a calculation by Open Computing Language (OpenCL) may be performed.

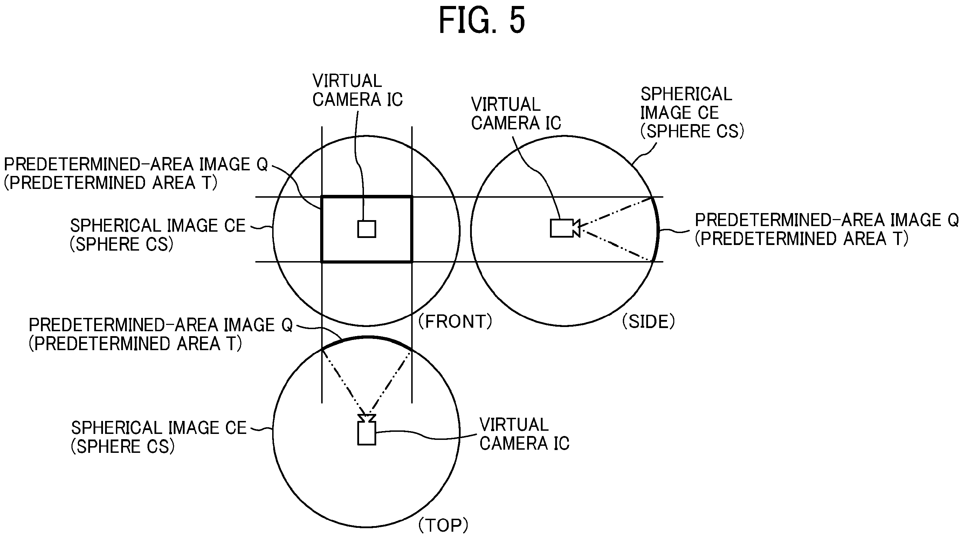

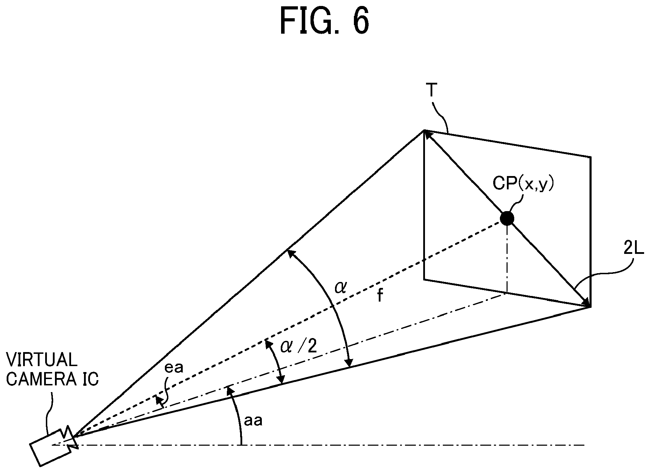

Since the spherical image CE is an image mapped onto the surface of a sphere to cover the surface of the sphere, part of the image may look distorted when viewed by a user, providing a strange feeling. To resolve this strange feeling, the image capturing device 10 displays an image of a predetermined area T, which is part of the spherical image CE, as a planar image having fewer curves. The predetermined area is, for example, a part of the spherical image CE that is viewable by the user. In this disclosure, the image of the predetermined area, which is viewable, may be referred to as a "predetermined-area image" or "viewable-area image" Q. That is, the term "predetermined-area image" and "viewable-area image" may be used interchangeably. Hereinafter, a description will be given of displaying the predetermined-area image Q with reference to FIG. 5 and FIG. 6.

FIG. 5 illustrates positions of a virtual camera IC and the predetermined area T in a case in which the spherical image CE is represented as a three-dimensional solid sphere. The virtual camera IC corresponds to a position of a point of view (viewpoint) of a user who is viewing the spherical image CE represented as a surface area of a three-dimensional solid sphere. In FIG. 5, the spherical image CE is represented as a surface area of a three-dimensional solid sphere CS. Assuming that the spherical image CE having been generated is the surface area of the solid sphere CS, the virtual camera IC is inside the spherical image CE as illustrated in FIG. 5. The predetermined area T in the spherical image CE is an imaging area of the virtual camera IC. Specifically, the predetermined area T is specified by predetermined-area information indicating an image capturing direction and an angle of view of the virtual camera IC in a three-dimensional virtual space containing the spherical image CE. In addition, zooming in or out the predetermined area T is also determined by bringing the virtual camera IC closer to or away from the spherical image CE. The predetermined-area image Q is an image of the predetermined area T in the spherical image CE. The predetermined area T is defined by an angle of view $\alpha$ and a distance f from the virtual camera IC to the spherical image CE.

The predetermined-area image Q is displayed on a predetermined display as an image of the imaging area of the virtual camera IC. In the following description, an image capturing direction (ea, aa) and the angle of view $\alpha$ of the virtual camera IC are used, by way of example. In another example, the predetermined area T is identified by an imaging area (X, Y, Z) of the virtual camera IC, i.e., the predetermined area T, rather than by the angle of view $\alpha$ and the distance f.

Referring now to FIG. 6, a relationship between the predetermined-area information and the image of the predetermined area T will be described. FIG. 6 illustrates a relationship between the predetermined-area information and the image of the predetermined area T. As illustrated in FIG. 6, reference character "ea" represents an elevation angle, reference character "aa" represents an azimuth angle, and reference character "$\alpha$" represents an angle of view. The position of the virtual camera IC is adjusted such that the point of gaze of the virtual camera IC, indicated by the image capturing direction (ea, aa), matches a center point CP (x, y) of the predetermined area T as the imaging area of the virtual camera IC. As illustrated in FIG. 6, when it is assumed that a diagonal angle of view of the predetermined area T specified by the angle of view $\alpha$ of the virtual camera IC is $\alpha$, the center point CP (x, y) provides the parameters (x, y) of the predetermined-area information. The predetermined-area image Q is an image of the predetermined area T in the spherical image CE. Reference character "f" represents the distance from the virtual camera IC to the center point CP (x, y). Reference character "L" represents a distance between the center point CP (x, y) and a given vertex of the predetermined area T (2L is a diagonal line). In FIG. 6, a trigonometric function generally expressed by Formula (1) below is satisfied.

$$L/f = \tan(\alpha/2) \ (1)$$

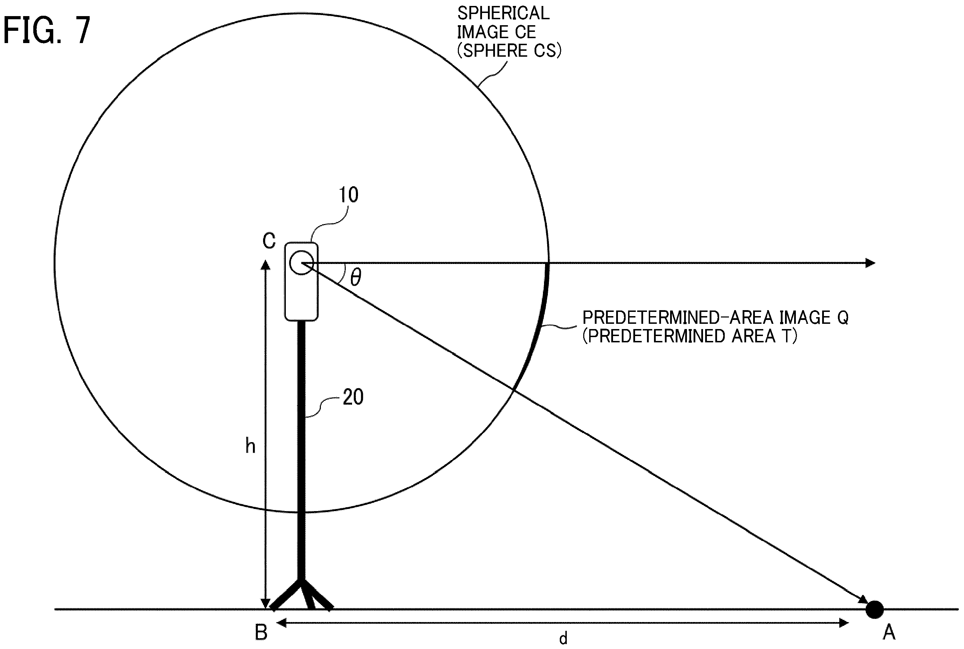

The capturing of an image by the image capturing device 10 will now be described with reference to FIG. 7. FIG. 7 illustrates an example state of the image capturing device 10 at the time of capturing an image. To capture an image to overlook the entire room of a structure such as a real estate property, it is preferable to set the image capturing device 10 in position at a height close to the height of human eyes. Accordingly, as illustrated in FIG. 7, the image capturing device 10 is typically fixed by a support member 20 such as a monopod or a tripod to capture an image. As described above, the image capturing device 10 is a spherical image capturing device configured to capture light rays in all directions, and can be said to capture an image (e.g., the spherical image CE) on a unit sphere around the image capturing device 10. When the image capturing direction of the image capturing device 10 is determined, the coordinates on the spherical image are determined. For example, in FIG. 7, a point A is at a distance (d, -h) away from a center point C of the image capturing device 10. When an angle formed by a line segment AC and the horizontal direction is θ, the angle θ is expressed by formula (2) below.

$$\theta = \arctan(h/d) \ (2)$$

When it is assumed that the point A is at a depression angle θ, the distance d between the point A and a point B can be expressed by Formula (3) below by using a height h at which the image capturing device 10 is set in position.

$$d = h/\tan\theta \ (3)$$

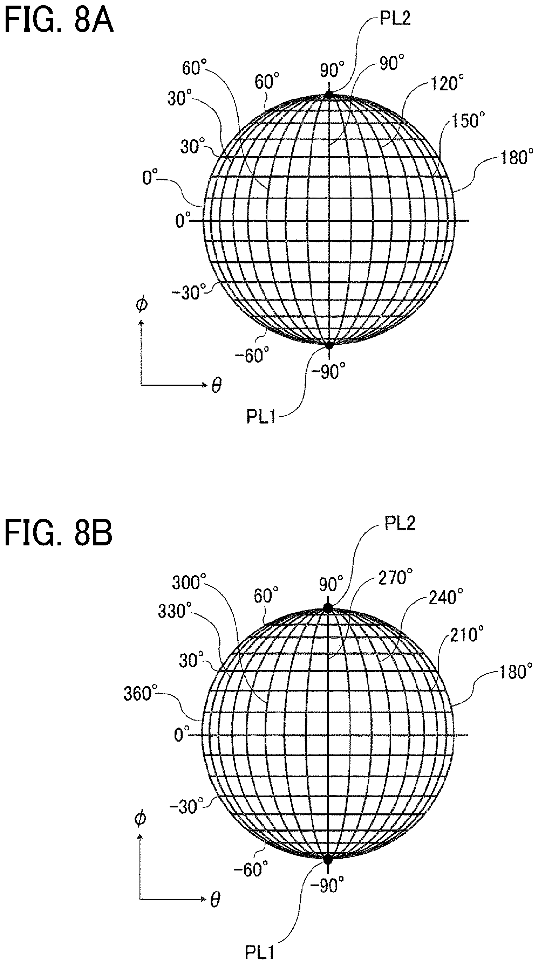

A schematic description will be given of a process for converting position information indicating a position on a spherical image into coordinates on a planar image converted from the spherical image. FIGs. 8A and 8B illustrate examples of spherical images. FIG. 8A is an illustration of the hemispherical image illustrated in FIG. 3A on which points at which incident angles in the horizontal direction and the vertical direction with respect to an optical axis are equivalent are connected to each other with lines. In the following description, the incident angle in the horizontal direction with respect to the optical axis is referred to as "θ", and the incident angle in the vertical direction with respect to the optical axis is referred to as "φ".

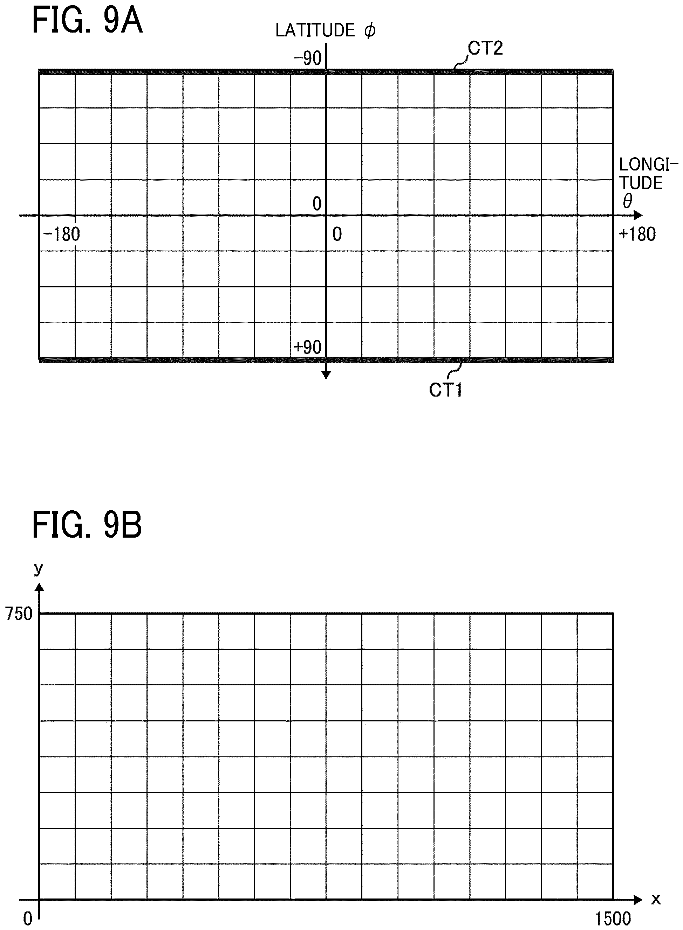

FIG. 9A illustrates an example of an image processed by equirectangular projection. Specifically, the images illustrated in FIGs. 8A and 8B are associated with each other by using a look up table (LUT) generated in advance and are processed by equirectangular projection, and the processed images, which are illustrated in FIGs. 8A and 8B, are combined. In this way, the image capturing device 10 generates a planar image illustrated in FIG. 9A corresponding to the spherical image. The equirectangular projection image EC illustrated in FIG. 3C is an example of the planar image illustrated in FIG. 9A.

As illustrated in FIG. 9A, in the image processed by equirectangular projection, the latitude (φ) and the longitude (θ) are orthogonal to each other. In the example illustrated in FIG. 9A, a position in the spherical image is indicated by setting the center of the image at (0, 0) and expressing a latitude direction as a value from -90 to +90 and a longitude direction as a value from -180 to +180. For example, the coordinates of the upper left corner of the image are (-180, -90). The coordinates on the spherical image may be represented in a format using 360 degrees as illustrated in FIG. 9A, or may be represented by radian display or display of the number of pixels as in a real image. Alternatively, the coordinates on the spherical image may be converted into two-dimensional coordinates (x, y) as illustrated in FIG. 9B.

It should be noted that the combining process to obtain the planar image illustrated in FIG. 9A or 9B is not limited to the process of simply and continuously arranging the hemispherical images illustrated in FIGs. 8A and 8B. For example, when the horizontal center of the spherical image is not θ = 180 degrees, in the combining process, the image capturing device 10 first pre-processes the hemispherical image illustrated in FIG. 3A and arranges the pre-processed hemispherical image at the center of the spherical image. Then, the image capturing device 10 pre-processes the hemispherical image illustrated in FIG. 3B. The image capturing device 10 may divide the pre-processed image into sub-images having sizes such that the sub-images can be arranged as left and right portions of the image to be generated, and combine the hemispherical images to generate the equirectangular projection image EC illustrated in FIG. 3C.

In the planar image illustrated in FIG. 9A, a portion corresponding to the pole point (PL1 or PL2) of each of the hemispherical images (spherical images) illustrated in FIGs. 8A and 8B is a line segment CT1 or CT2. This is because, as illustrated in FIGs. 4A and 4B, the spherical image (e.g., the spherical image CE) is created by mapping the planar image (e.g., the equirectangular projection image EC) illustrated in FIG. 9A onto the surface of a sphere by using OpenGL ES.

Example of Image Capturing Device Applicable to Image Processing System

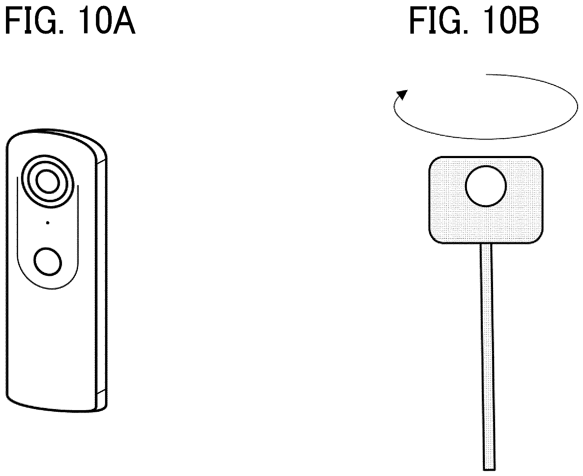

FIGs. 10A and 10B are schematic views illustrating examples of image capturing devices applicable to the image processing system 1. FIG. 10A illustrates a special image capturing device including a plurality of imaging elements configured to generate a spherical image by using the generation method described above. The special image capturing device uses an optical system including a lens having a wide angle of view, such as a wide-angle lens or a fish-eye lens, and combines outputs of the plurality of imaging elements to obtain an image captured in all directions. FIG. 10B illustrates a general-purpose image capturing device, which is namely a standard camera. The general-purpose image capturing device is, for example, a standard digital camera or a mobile terminal such as a smartphone including a camera. A photographer holds the general-purpose image capturing device in his or her hand and performs image capturing by rotating. The general-purpose image capturing device combines obtained images to obtain an omnidirectional image, namely, an image captured in all directions. Each of the special image capturing device and the general-purpose image capturing device stitches a plurality of imaging results together by image processing (stitching processing) to generate a final captured image. The optical centers of the image capturing devices for obtaining a plurality of imaging results may be the same.

Hardware Configurations

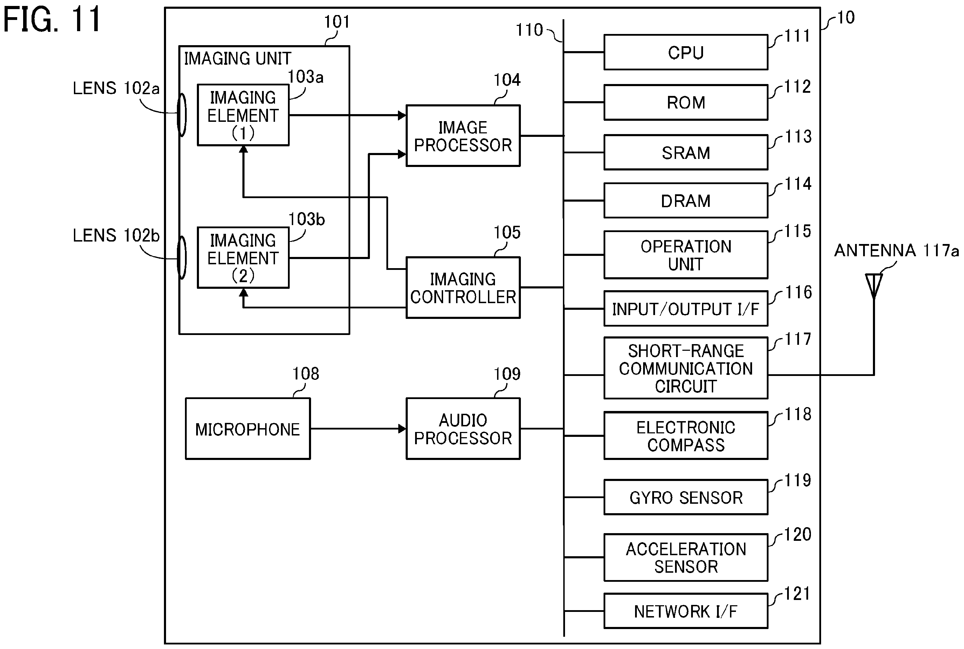

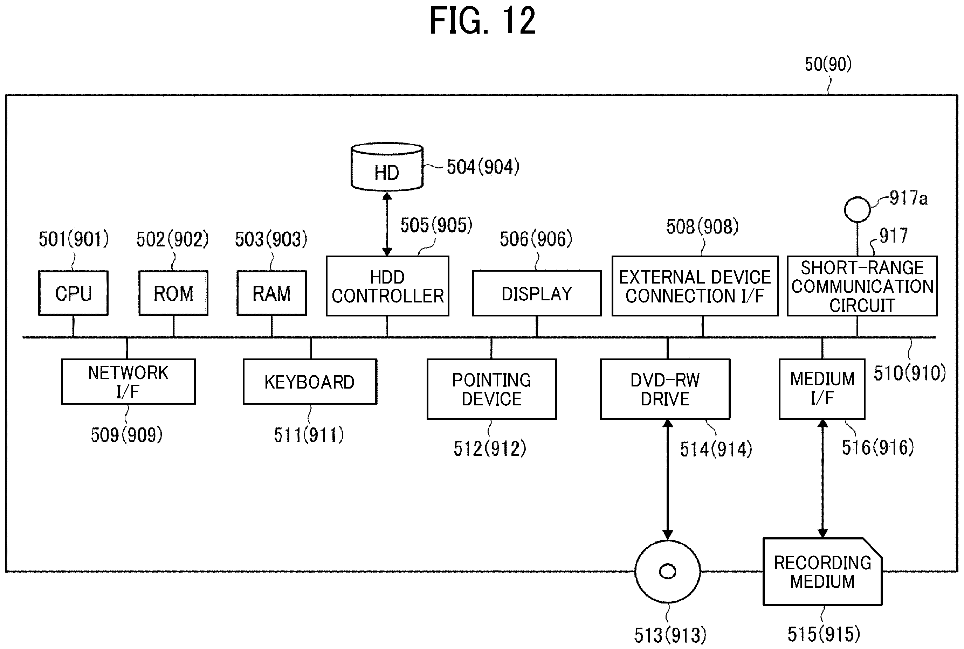

The hardware configurations of each apparatus, device, and terminal of the image processing system 1 according to an embodiment will be described with reference to FIGs. 11 and 12. In the hardware configurations illustrated in FIGs. 11 and 12, certain hardware elements may be added or deleted as appropriate.

Hardware Configuration of Image Capturing Device

First, the hardware configuration of the image capturing device 10 will be described with reference to FIG. 11. FIG. 11 is a block diagram illustrating an example hardware configuration of the image capturing device 10. The following describes a case in which the image capturing device 10 is a spherical (omnidirectional) image capturing device having two imaging elements. In some embodiments, the image capturing device 10 includes any suitable number of imaging elements, provided that the image capturing device 10 includes at least two imaging elements. In another example, the image capturing device 10 is not an image capturing device dedicated to omnidirectional image capturing. An external omnidirectional image capturing unit may be attached to a general-purpose digital camera or a smartphone to implement an image capturing device having substantially the same functions as those of the image capturing device 10.

As illustrated in FIG. 11, the image capturing device 10 includes an imaging unit 101, an image processor 104, an imaging controller 105, a microphone 108, an audio processor 109, a CPU 111, a read only memory (ROM) 112, a static random access memory (SRAM) 113, a dynamic random access memory (DRAM) 114, an operation unit 115, an input/output interface (I/F) 116, a short-range communication circuit 117, an antenna 117a for the short-range communication circuit 117, an electronic compass 118, a gyro sensor 119, an acceleration sensor 120, and a network I/F 121. The image capturing device 10 also includes an image signal processor (ISP), which is a processor that processes a video signal.

The imaging unit 101 includes optical systems (wide-angle lenses or so-called fish-eye lenses) 102a and 102b (collectively referred to as "lens 102" unless otherwise distinguished from each other), each having an angle of view of equal to or greater than 180 degrees to form a hemispherical image. The imaging unit 101 further includes two imaging elements 103a and 103b corresponding to the lenses 102a and 102b, respectively. In the description of the present embodiment, a combination of a single optical system and a single imaging element is referred to as an imaging optical system, and two imaging optical systems are arranged to face each other to implement the image capturing device 10. The image capturing device 10 may be implemented by using two or more imaging optical systems. The imaging elements 103a and 103b each include an imaging sensor such as a complementary metal oxide semiconductor (CMOS) sensor or a charge-coupled device (CCD) sensor, a timing generation circuit, and a group of registers. The imaging sensor converts an optical image formed by the lens 102a or 102b into electric signals to output image data. The timing generation circuit generates horizontal or vertical synchronization signals, pixel clocks, and the like for the imaging sensor. Various commands and parameters for operations of the imaging elements 103a and 103b are set in the respective groups of registers.

Each of the imaging elements 103a and 103b of the imaging unit 101 is connected to the image processor 104 via a parallel I/F bus. In addition, each of the imaging elements 103a and 103b of the imaging unit 101 is connected to the imaging controller 105 via a serial I/F bus such as an inter-integrated circuit (I2C) bus. The image processor 104, the imaging controller 105, and the audio processor 109 are connected to the CPU 111 via a bus 110. The ROM 112, the SRAM 113, the DRAM 114, the operation unit 115, the input/output I/F 116, the short-range communication circuit 117, the electronic compass 118, the gyro sensor 119, the acceleration sensor 120, and the network I/F 121 are also connected to the bus 110.

The image processor 104 acquires image data output from each of the imaging elements 103a and 103b via the parallel I/F bus and performs predetermined processing on the acquired image data. Thereafter, the image processor 104 combines the resulting items of image data to generate data of an equirectangular projection image as illustrated in FIG. 3C.

The imaging controller 105 usually functions as a master device while each of the imaging elements 103a and 103b usually functions as a slave device. The imaging controller 105 sets commands and the like in the group of registers of each of the imaging elements 103a and 103b via the I2C bus. The imaging controller 105 receives commands from the CPU 111. The imaging controller 105 further acquires status data and the like of the group of registers of each of the imaging elements 103a and 103b via the I2C bus. The imaging controller 105 sends the acquired status data and the like to the CPU 111.

The imaging controller 105 instructs the imaging elements 103a and 103b to output the image data at the time when a shutter button of the operation unit 115 is pressed. In some cases, the image capturing device 10 displays a preview image on a display (e.g., a display of an external terminal such as a smartphone that performs short-range communication with the image capturing device 10 through the short-range communication circuit 117) or displays a moving image (movie). In case of displaying a moving image, the image data is continuously output from the imaging elements 103a and 103b at a predetermined frame rate (frames per second).

The imaging controller 105 operates in cooperation with the CPU 111 to synchronize the time when the imaging element 103a outputs image data and the time when the imaging element 103b outputs the image data. In the present embodiment, the image capturing device 10 does not include a display unit (display). However, in some embodiments, the image capturing device 10 may include a display. The microphone 108 converts sounds to audio data (signals). The audio processor 109 acquires the audio data output from the microphone 108 via an I/F bus and performs predetermined processing on the audio data.

The CPU 111 controls the overall operation of the image capturing device 10 and performs processing. The ROM 112 stores various programs for execution by the CPU 111. The SRAM 113 and the DRAM 114 each operate as a work memory to store programs for execution by the CPU 111 or data in current processing. More specifically, in one example, the DRAM 114 stores image data currently processed by the image processor 104 and data of the equirectangular projection image on which processing has been performed.

The operation unit 115 collectively refers to, for example, various operation keys, a power switch, the shutter button, and a touch panel having both a display function and an operation function. The user operates the operation unit 115 to input various image capturing (photographing) modes or image capturing (photographing) conditions.

The input/output I/F 116 collectively refers to an interface circuit that allows the image capturing device 10 to communicate data with an external medium such as a Secure Digital (SD) card or an external personal computer. Examples of the interface circuit include an SD card I/F and a Universal Serial Bus (USB) I/F. The input/output I/F 116 may be either wired or wireless. The data of the equirectangular projection image, which is stored in the DRAM 114, is recorded on an external medium via the input/output I/F 116 or transmitted to an external terminal (apparatus) via the input/output I/F 116, as desired.

The short-range communication circuit 117 communicates with an external terminal (apparatus) via the antenna 117a of the image capturing device 10 by using short-range wireless communication technology such as near field communication (NFC), Bluetooth®, or Wi-Fi®. In one embodiment, the short-range communication circuit 117 transmits the data of the equirectangular projection image to the external terminal (apparatus).

The electronic compass 118 calculates an orientation of the image capturing device 10 from the Earth's magnetism to output orientation information. The orientation information is an example of related information, which is metadata described in compliance with Exif. This information is used for image processing such as image correction of captured images. The related information also includes a date and time when the image is captured by the image capturing device 10, and a data size of the image data. The gyro sensor 119 detects a change in angle of the image capturing device 10 (roll, pitch, yaw) with movement of the image capturing device 10. The change in angle is one example of related information (metadata) described in compliance with Exif. This information is used for image processing such as image correction of a captured image. The acceleration sensor 120 detects acceleration in three axial directions. The image capturing device 10 calculates position (an angle with respect to the direction of gravity) of the image capturing device 10, based on the acceleration detected by the acceleration sensor 120. With the gyro sensor 119 and the acceleration sensor 120, the image capturing device 10 corrects the tilt of images with high accuracy. The network I/F 121 is an interface for performing data communication via a router or the like over the communication network 100 such as the Internet.

Hardware Configuration of Server

The hardware configuration of the server 50 according to the present embodiment will be described with reference to FIG. 12. FIG. 12 is a block diagram illustrating an example hardware configuration of the server 50. Each of the components of the hardware configuration of the server 50 is denoted by a reference numeral in 500 series. The server 50 is implemented by a computer. As illustrated in FIG. 12, the server 50 includes a CPU 501, a ROM 502, a RAM 503, a hard disk (HD) 504, a hard disk drive (HDD) controller 505, a display 506, an external device connection I/F 508, a network I/F 509, a bus line 510, a keyboard 511, a pointing device 512, a digital versatile disc rewritable (DVD-RW) drive 514, and a medium I/F 516.

The CPU 501 controls the overall operation of the server 50. The ROM 502 stores programs such as an initial program loader (IPL) used for booting the CPU 501. The RAM 503 is used as a work area for the CPU 501. The HD 504 stores various types of data such as programs. The HDD controller 505 controls reading or writing of various types of data from or to the HD 504 under control of the CPU 501. The display 506 displays various types of information such as a cursor, a menu, a window, text, or an image. In one example, the display 506 is a touch panel display provided with an input device (input means). The external device connection I/F 508 is an interface for connecting the server 50 to various external devices. Examples of the external devices include, but are not limited to, a USB memory. The network I/F 509 is an interface for performing data communication using the communication network 100. The bus line 510 is an address bus, a data bus, or the like for electrically connecting the components illustrated in FIG. 12, such as the CPU 501, to each other.

The keyboard 511 is an example of an input device (input means) including a plurality of keys for inputting characters, numerical values, various instructions, and the like. The pointing device 512 is an example of an input device (input means) that allows a user to select or execute various instructions, select a target for processing, or move a cursor being displayed. The input device (input means) is not limited to the keyboard 511 and the pointing device 512, and may be a touch panel, a voice input device, or the like. The DVD-RW drive 514 controls reading or writing of various types of data to or from a DVD-RW 513, which is an example of a removable recording medium. The DVD-RW 513 is one example of the removable recording medium. In another example, any other removable recording medium such as a digital versatile disc-recordable (DVD-R) or a Blu-ray Disc® may be used. The medium I/F 516 controls reading or writing (storing) of data from or to a recording medium 515 such as a flash memory.

Hardware Configuration of Communication Terminal

FIG. 12 also illustrates an example hardware configuration of the communication terminal 90. Each of the components of the hardware configuration of the communication terminal 90 is denoted by a reference numeral in 900 series in parentheses. The communication terminal 90 is implemented by a computer. As illustrated in FIG. 12, the communication terminal 90 has similar components as those of the server 50, and thus the description of each of the components of the hardware configuration of the communication terminal 90 will be omitted. The communication terminal 90 includes the same components as those of the server 50 and also includes a short-range communication circuit 917 and an antenna 917a of the short-range communication circuit 917. The short-range communication circuit 917 is a communication circuit in compliance with a communication standard such as NFC, Bluetooth®, or Wi-Fi®.

Each of the programs described above may be recorded as a file in an installable or executable format on a computer-readable recording medium for distribution. Examples of the recording medium include a compact disc recordable (CD-R), a digital versatile disc (DVD), a Blu-ray Disc®, an SD card, and a USB memory. Such recording media may be provided in the domestic or global markets as program products. For example, the server 50 executes a program according to an embodiment of the present disclosure to implement an image processing method according to an embodiment of the present disclosure.

Functional Configuration

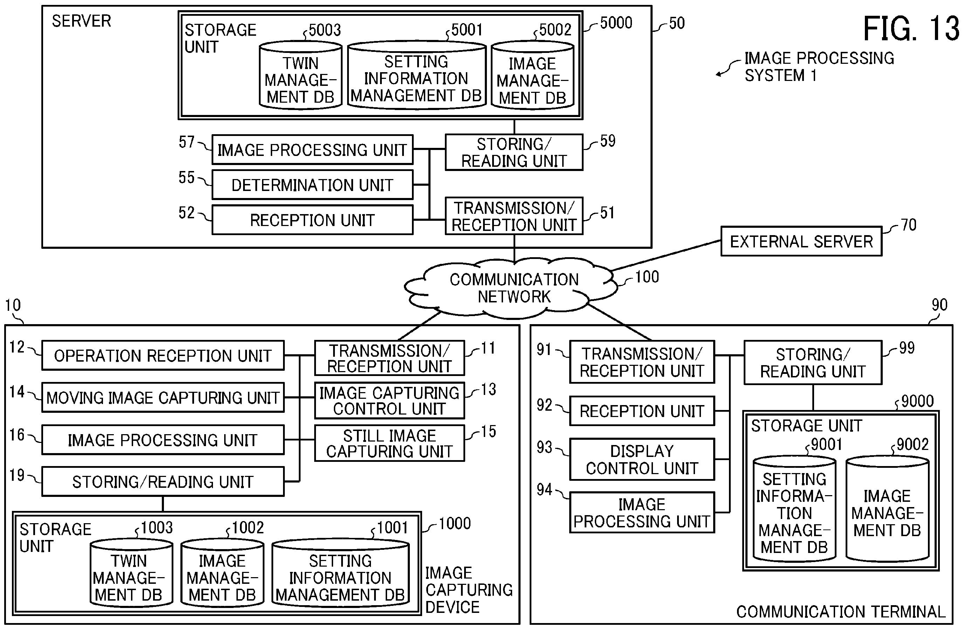

The functional configuration of the image processing system 1 according to an embodiment will be described with reference to FIG. 13. FIG. 13 is a block diagram illustrating an example functional configuration of the image processing system 1. FIG. 13 illustrates components related to processing or operation described below among the components of the apparatus, device, and terminal illustrated in FIG. 1.

Functional Configuration of Image Capturing Device

First, the functional configuration of the image capturing device 10 will be described with reference to FIG. 13. The image capturing device 10 includes a transmission/reception unit 11, an operation reception unit 12, an image capturing control unit 13, a moving image capturing unit 14, a still image capturing unit 15, an image processing unit 16, and a storing/reading unit 19. These units are each a function or means implemented by one or more of the components illustrated in FIG. 11 operating in accordance with instructions from the CPU 111 according to an image capturing device program loaded onto the DRAM 114 from the SRAM 113. The image capturing device 10 further includes a storage unit 1000, which is implemented by the ROM 112, the SRAM 113, and the DRAM 114 illustrated in FIG. 11. The storage unit 1000 stores a globally unique identifier (GUID) identifying the image capturing device 10.

The transmission/reception unit 11 is an example of a transmission device (transmission means) and a reception device (reception means). The transmission/reception unit 11 is implemented mainly by processing of the CPU 111 and transmits or receives various types of data or information to or from another device or terminal. The transmission/reception unit 11 perform data communication with another device or terminal via the network I/F 121 over the communication network 100.

The operation reception unit 12 is implemented mainly by the operation unit 115 operating in accordance with instructions from the CPU 111. The operation reception unit 12 receives various selections or inputs performed by a user who is a photographer.

The image capturing control unit 13 is implemented mainly by the imaging unit 101, the image processor 104, and the imaging controller 105 operating in accordance with instructions from the CPU 111. The image capturing control unit 13 captures an image of a subject such as surroundings (e.g., scenery) to obtain captured image data. For example, the image capturing control unit 13 performs image capturing by switching between moving image capturing using the moving image capturing unit 14 and still image capturing using the still image capturing unit 15 in a time-division manner.

The moving image capturing unit 14 is implemented mainly by the imaging unit 101, the image processor 104, and the imaging controller 105 operating in accordance with instructions from the CPU 111. The moving image capturing unit 14 captures a moving image by the image capturing device 10. For example, the moving image capturing unit 14 captures a moving image while moving in a structure such as a real estate property, which is a predetermined site, or a space in which the structure is located. The moving image capturing unit 14 captures a moving image as low-resolution continuous frames while the photographer is moving with the image capturing device 10, and stores the captured image data in the storage unit 1000. For example, the moving image capturing unit 14 captures a moving image when a photographer holding the image capturing device 10 is moving from a first point to a second point in a real estate property, which is a predetermined site.

The still image capturing unit 15 is implemented mainly by the imaging unit 101 and the image processor 104, and the imaging controller 105 operating in accordance with instructions from the CPU 111. The still image capturing unit 15 captures an image of a subject such as surroundings (e.g., scenery) and captures a still image by the image capturing device 10. For example, the still image capturing unit 15 captures a plurality of still images each of which is captured at a different image capturing position in a structure such as a real estate property, which is a predetermined site, or a space in which the structure is located. For example, the still image capturing unit 15 captures a still image (photograph) with a resolution greater than the moving image captured by the moving image capturing unit 14, and stores the captured image data in the storage unit 1000. The still image captured by the still image capturing unit 15 may be an image of one frame, or may be a high dynamic range (HDR) image obtained by combining a plurality of images. The capturing of a moving image is performed during movement within the predetermined site, and the capturing of a still image is performed in a stationary position within the predetermined site.

An image capturing specification used for the capturing of a moving image and an image capturing specification used for the capturing of a still image are different from each other depending on the image capturing purposes. In the capturing of a moving image, continuous images (continuous frames) at a high frame rate are obtained and used for position estimation. In one example, such images do not have high resolution or color layers, but are grayscale images with low resolution. In the capturing of a still image, continuous frames are not obtained, but an image with high resolution, color information (e.g., red (R), green (G), and blue (B)), and a high dynamic range is captured. It is preferable that a still image captured by the still image capturing unit 15 have a high resolution equal to or greater than the 4K resolution, for example, for the purpose of obtaining an image to be viewed. On the other hand, a moving image captured by the moving image capturing unit 14 is an image used for position estimation. The moving image is an image having a resolution less than that of a still image because it is sufficient that a subject captured in the moving image be identifiable. The moving image may have a resolution of, for example, about 480 p or less. The image capturing device 10 captures a low-resolution moving image. As a result, the total amount of data used to capture an image for a tour can be reduced.

The image processing unit 16 is implemented mainly by processing of the CPU 111. The image processing unit 16 performs various image processing operations on a still image captured by the still image capturing unit 15 or a moving image captured by the moving image capturing unit 14.

The storing/reading unit 19 is an example of a setting device (setting means) and is implemented mainly by processing of the CPU 111. The storing/reading unit 19 stores various types of data (or information) in the storage unit 1000 or reads various types of data (or information) from the storage unit 1000. The storage unit 1000 also stores image data captured by the moving image capturing unit 14 and the still image capturing unit 15. The image data stored in the storage unit 1000 is associated with the time at which the captured image is captured as metadata.

The storage unit 1000 includes a setting information management database (DB) 1001, an image management DB 1002, and a twin management DB 1003. The setting information management DB 1001 includes a setting information management table described below and stores and manages, for example, setting information for image processing to be performed on a still image or a moving image by the image processing unit 16.

The image management DB 1002 stores and manages images captured by the image capturing device 10 and processed images obtained by the image processing unit 16 performing image processing on the captured images. Each of the captured images and a corresponding one of the processed images are stored in association with an image ID. The captured images and the processed images may be stored in a storage medium such as an SD memory card, which is the external medium described above.

The twin management DB 1003 manages a twin ID that identifies a twin in association with a user ID. As described in detail below, a twin refers to a function for allowing the server 50 to hold information on an actual device such as the image capturing device 10. Examples of the information include metadata, the configuration, and the state of the actual device.

Functional Configuration of Server

First, the functional configuration of the server 50 will be described with reference to FIG. 13. The server 50 includes a transmission/reception unit 51, a reception unit 52, a determination unit 55, an image processing unit 57, and a storing/reading unit 59. These units are each a function or means implemented by one or more of the components illustrated in FIG. 12 operating in accordance with instructions from the CPU 501 according to a server program loaded onto the RAM 503 from the HD 504. The server 50 further includes a storage unit 5000, which is implemented by the ROM 502, the RAM 503, and the HD 504 illustrated in FIG. 12.

The transmission/reception unit 51 is an example of a transmission device (transmission means) and a reception device (reception means). The transmission/reception unit 51 is implemented mainly by the network I/F 509 operating in accordance with instructions from the CPU 501 and transmits or receives various types of data or information to or from another device or terminal over the communication network 100. For example, the transmission/reception unit 51 receives (obtains) a moving image captured by the image capturing device 10 from the image capturing device 10 or the communication terminal 90. For example, the transmission/reception unit 51 receives (obtains) a still image captured by the image capturing device 10 from the image capturing device 10 or the communication terminal 90.

The reception unit 52 is implemented mainly by the keyboard 511 or the pointing devices 512 operating in accordance with instructions from the CPU 501. The reception unit 52 receives various selections or inputs from the user.

The determination unit 55 is implemented by processing of the CPU 501 and performs various determinations.

The image processing unit 57 is implemented by processing of the CPU 501 and performs various image processing operations on a still image or a moving image.

The storing/reading unit 59 is an example of a setting device (setting means) and is implemented mainly by processing of the CPU 501. The storing/reading unit 59 stores various types of data (or information) in the storage unit 5000 or reads various types of data (or information) from the storage unit 5000.

The storage unit 5000 includes a setting information management DB 5001, an image management DB 5002, and a twin management DB 5003. The setting information management DB 5001 includes a setting information management table described below and stores and manages, for example, setting information for image processing to be performed on a still image or a moving image by the image processing unit 57.

The image management DB 5002 stores and manages processed images subjected to image processing by the image capturing device 10 or the communication terminal 90 and received from the image capturing device 10 or the communication terminal 90, and processed images obtained by the image processing unit 57 performing image processing on the received processed images. Each of the received processed images and a corresponding one of the obtained processed images are stored in association with an image ID.

The processed images obtained by the image processing unit 57 performing image processing may be transmitted to the image capturing device 10 or the communication terminal 90 and stored in the image management DB 1002 of the image capturing device 10 or an image management DB 9002 of the communication terminal 90, described below. Alternatively, the processed images may be stored in a storage medium such as an SD memory card.

The twin management DB 5003 manages a twin ID that identifies a twin in association with a user ID and a model ID that identifies the image capturing device 10.

Functional Configuration of Communication Terminal

The functional configuration of the communication terminal 90 will be described with reference to FIG. 13. The communication terminal 90 includes a transmission/reception unit 91, a reception unit 92, a display control unit 93, an image processing unit 94, and a storing/reading unit 99. These units are each a function or means implemented by one or more of the components illustrated in FIG. 12 operating in accordance with instructions from the CPU 901 according to a communication terminal program loaded onto the RAM 903 from the HD 904. The communication terminal 90 further includes a storage unit 9000, which is implemented by the ROM 902, the RAM 903, and the HD 904 illustrated in FIG. 12.

The transmission/reception unit 91 is an example of a transmission device (transmission means) and a reception device (reception means). The transmission/reception unit 91 is implemented mainly by the network I/F 909 operating in accordance with instructions from the CPU 901 and transmits or receives various types of data or information to or from another device or terminal over the communication network 100.

The reception unit 92 is an example of a setting device (setting means) and is implemented mainly by the keyboard 911 or the pointing devices 912 operating in accordance with instructions from the CPU 901. The reception unit 92 receives various selections or inputs from the user.

The display control unit 93 is implemented mainly by processing of the CPU 901 and controls the display 906 to display various images or text, for example. The display control unit 93 accesses the server 50 by using, for example, a web browser or a dedicated application and causes the display 906 to display an image corresponding to data distributed from the server 50.

The image processing unit 94 is implemented mainly by processing of the CPU 901 and performs various image processing operations on a still image or a moving image.

The storing/reading unit 99 is implemented mainly by processing of the CPU 901. The storing/reading unit 99 stores various types of data (or information) in the storage unit 9000 or reads various types of data (or information) from the storage unit 9000.

The storage unit 9000 includes a setting information management DB 9001 and an image management DB 9002. The setting information management DB 9001 includes a setting information management table described below and stores and manages, for example, setting information for image processing to be performed on a still image or a moving image by the image processing unit 94.

The image management DB 9002 stores and manages images captured by the image capturing device 10 and receives from the image capturing device 10, and processed images obtained by the image processing unit 94 performing image processing on the captured images. Each of the captured images and a corresponding one of the processed images are stored in association with an image ID. The captured images and the processed images may be stored in a storage medium such as an SD memory card, which is an external medium.

The image processing system 1 described above has a twin function. The twin function is a function for allowing the server 50 to hold information on an actual device such as the image capturing device 10. Examples of the information include metadata, the configuration, and the state of the actual device. With this function, a digital twin of the image capturing device 10 is generated in the server 50.

The actual device (i.e., the image capturing device 10) and the twin (in the server 50) are synchronized with each other via the communication network 100. Examples of the information to be synchronized between the image capturing device 10 and the server 50 further include an image (a still image or a moving image) and information related to image capturing.

The twin function enables the server 50 and the image capturing device 10 to directly communicate with each other. In one example, image data captured by the image capturing device 10 is directly uploaded to the twin and reflected in the twin. In another example, a change in the settings of the image capturing device 10 is reflected in the settings of the twin, or a change in the settings of the twin is reflected in the settings of the image capturing device 10.

Specifically, in response to image processing being set by the twin, image processing to be performed by the image capturing device 10 is also set.

In FIG. 13, the functional units that cause the server 50 to function as a twin are the transmission/reception unit 51, the reception unit 52, the determination unit 55, the storing/reading unit 59, and the storage unit 5000. In FIG. 12, the hardware components that cause the server 50 to function as a twin are the CPU 501, the ROM 502, the RAM 503, the network I/F 509, the HDD controller 505, and the HD 504.

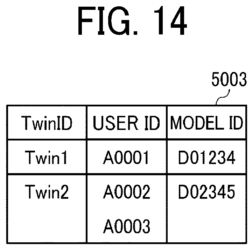

FIG. 14 is an illustration of an example of a twin management table according to the present embodiment.

FIG. 14 illustrates a twin management table included in the twin management DB 5003 in the storage unit 5000 of the server 50 illustrated in FIG. 13.

In the twin management table included in the twin management DB 5003, a twin ID that identifies a twin is managed in association with a user ID and a model ID that identifies the image capturing device 10.

The twin management DB 1003 in the storage unit 1000 of the image capturing device 10 illustrated in FIG. 13 also includes a twin management table. In the twin management table, a twin ID that identifies a twin is managed in association with a user ID.

The user ID may be shared by a team of multiple persons. The user ID may be the ID of the team and may be associated with sub-IDs that identify the individual persons.

In FIG. 14, one or more user IDs and one model ID indicating an image capturing device are assigned to one twin ID, by way of example. In another example, a plurality of twin IDs may be assigned to one user ID.

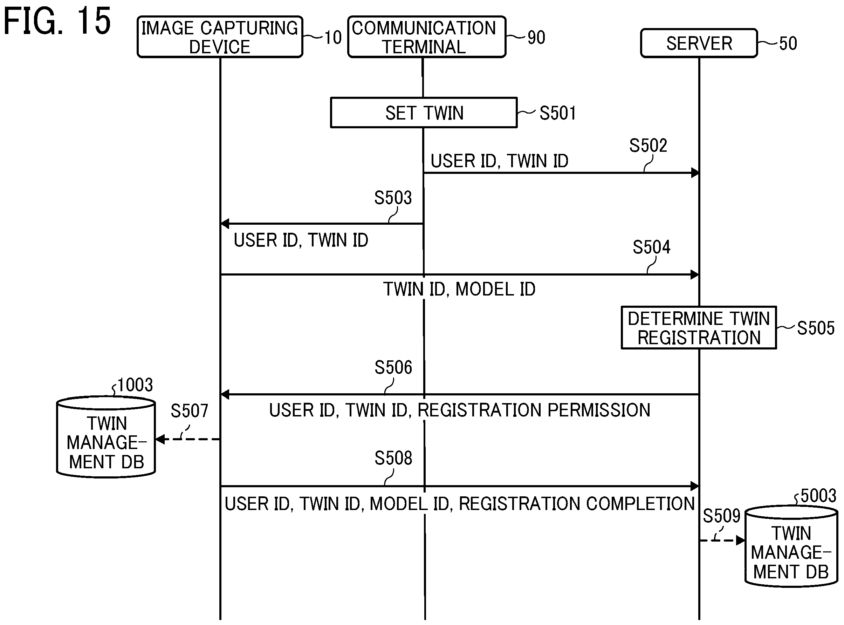

FIG. 15 is a sequence diagram illustrating an example of a twin registration process according to the present embodiment.

In response to a user inputting a user ID and a twin ID, the reception unit 92 of the communication terminal 90 receives set information (step S501).

The transmission/reception unit 91 transmits the user ID and the twin ID received in step S501 to the server 50, and the transmission/reception unit 51 of the server 50 receives the user ID and the twin ID transmitted from the communication terminal 90 (step S502).

The transmission/reception unit 91 of the communication terminal 90 transmits the user ID and the twin ID received in step S501 to the image capturing device 10, and the transmission/reception unit 11 of the image capturing device 10 receives the user ID and the twin ID transmitted from the communication terminal 90 (step S503).

The transmission/reception unit 11 of the image capturing device 10 transmits the twin ID received in step S503 and the model ID to the server 50, and the transmission/reception unit 51 of the server 50 receives the twin ID and the model ID transmitted from the image capturing device 10 (step S504).

The determination unit 55 of the server 50 determines whether twin registration is enabled, based on the user ID received in step S502 and the model ID received in step S504 (step S505). If twin registration is enabled, the transmission/reception unit 51 transmits the user ID, the twin ID, and registration permission information indicating that twin registration is enabled to the image capturing device 10, and the transmission/reception unit 11 of the image capturing device 10 receives the user ID, the twin ID, and the registration permission information transmitted from the server 50 (step S506).

The storing/reading unit 19 stores and registers the twin ID and the user ID received in step S506 in the twin management DB 1003 in association with each other, based on the registration permission information received in step S506 (step S507).

The transmission/reception unit 11 of the image capturing device 10 transmits the user ID, the twin ID, the model ID, and registration completion information indicating that the twin ID has been registered to the server 50, and the transmission/reception unit 51 of the server 50 receives the user ID, the twin ID, the model ID, and the registration completion information transmitted from the image capturing device 10 (step S508).

The storing/reading unit 59 stores and registers the twin ID, the model ID, and the user ID received in step S508 in the twin management DB 5003 in association with each other, based on the registration completion information received in step S508 (step S509).

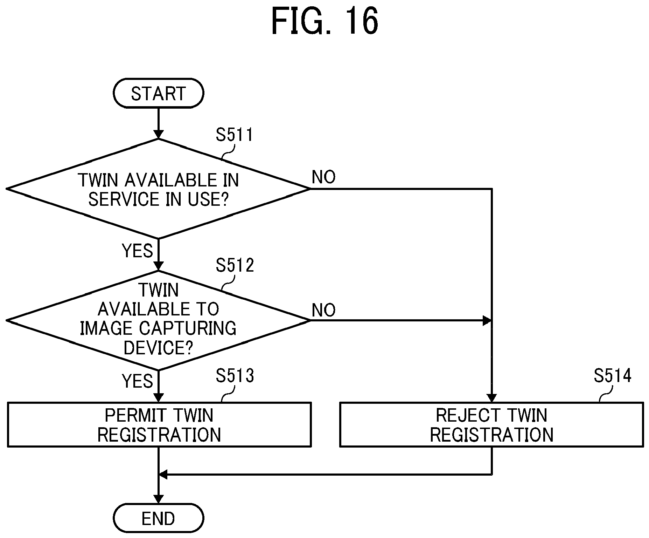

FIG. 16 is a flowchart illustrating an example of the twin registration process according to the present embodiment. FIG. 16 illustrates a process corresponding to step S505 of the sequence diagram illustrated in FIG. 15.

The server 50 stores programs that make various cloud services feasible. In one example, the server 50 generates a tour image for providing a virtual tour to a user by using an image captured by the image capturing device 10. The virtual tour is content that allows the user to view a real estate property as if the user were actually viewing the real estate property on the site, for example. The tour image is generated by using a plurality of captured images obtained by the image capturing device 10. The tour image is an image that is to be viewed by the user and that allows the user to virtually move in a site appearing in the captured images in accordance with the user's operation.

The determination unit 55 of the server 50 determines, based on the user ID, whether the twin function is available in a service such as the virtual tour described above that is being used by the user (step S511).

If it is determined in step S511 that the twin function is available, the determination unit 55 determines, based on the model ID, whether the twin function is available to the image capturing device 10 (step S512).

If it is determined in step S512 that the twin function is available, the transmission/reception unit 51 transmits the user ID, the twin ID, and registration permission information indicating that twin registration is enabled to the image capturing device 10 (step S513).

If it is determined in step S511 or S512 that the twin function is not available, the transmission/reception unit 51 transmits the user ID, the twin ID, and registration rejection information indicating that twin registration is not enabled to the image capturing device 10 and the communication terminal 90 (step S514).

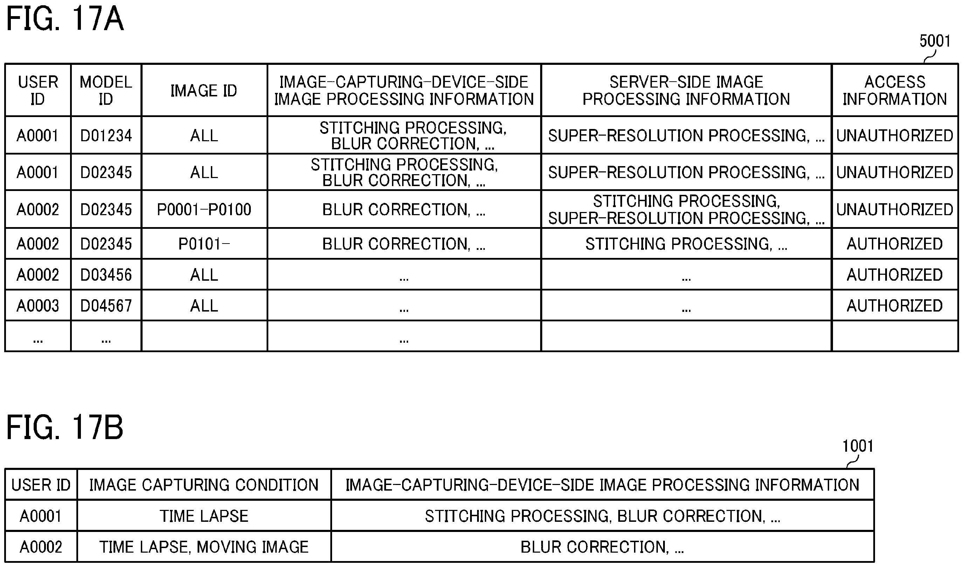

FIGs. 17A and 17B are illustrations of examples of setting information management tables according to the present embodiment.

FIG. 17A illustrates a setting information management table included in the setting information management DB 5001 in the storage unit 5000 of the server 50 illustrated in FIG. 13.

In the setting information management table included in the setting information management DB 5001, image-capturing-device-side image processing information, server-side image processing information, and access information are managed in association with a user ID, a model ID that identifies the image capturing device 10, and an image ID that identifies an image on which image processing is to be performed. The access information indicates whether an external server is authorized to access the images stored in the image management DB 5002.

The image-capturing-device-side image processing information is an example of first processing information indicating first image processing to be performed by the image capturing device 10 serving as a source apparatus. The server-side image processing information is an example of second processing information indicating second image processing to be performed by the server 50 serving as a destination apparatus. In one embodiment, the first image processing to be performed by the image capturing device 10 is image processing with a relatively small load, and the second image processing to be performed by the server 50 is image processing with a relatively large load.

The first image processing and the second image processing are implemented in the present embodiment as long as the first image processing and the second image processing are processing to be performed on images. Examples of such processing include stitching processing described below for stitching images obtained by the imaging elements 103a and 103b together to generate a spherical image, and zenith correction for adjusting an image such that the top and bottom of the image are oriented vertically upward and downward, respectively. Examples of the processing further include blur correction for correcting a blurry image caused by, for example, slight movements as the user's hand moves, and super-resolution processing for improving the resolution of an image. Examples of the processing further include flare correction for correcting flare caused by intense light being reflected off a lens or the like to make part or whole of the image white, object detection processing for detecting a specific object such as a face of a person, a person, or a marker for object detection, and denoising processing for removing or reducing noise generated in an image.

Various other types of image processing are available. In the present embodiment, in one example, image processing to be performed only by the image capturing device 10 and the image processing, examples of which have been described above, may be used. Examples of the image processing to be performed only by the image capturing device 10 include shading correction and color correction. Such correction is processed by the ISP of the image capturing device 10. An image captured by the image capturing device 10 is subjected to image compression by the image capturing device 10 before the image is transmitted to the server 50. Thus, image processing to be performed before the image compression is performed corresponds to the image processing to be performed only by the image capturing device 10. In other words, image processing that can be performed after the image compression is performed may be defined as the first image processing or the second image processing.

In the present embodiment, image processing is broadly divided into two operations: image-capturing-device-unique image processing to be performed only by the image capturing device 10; and first image processing and second image processing to be performed by the image capturing device 10 or the server 50. Image processing to be performed by the image capturing device 10 and the server 50 in a distributed manner, which will be described below, will be described as the first image processing and the second image processing.

FIG. 17B illustrates a setting information management table included in the setting information management DB 1001 in the storage unit 1000 of the image capturing device 10 illustrated in FIG. 13.

In the setting information management table included in the setting information management DB 1001, image capturing conditions and image-capturing-device-side image processing information are managed in association with a user ID.

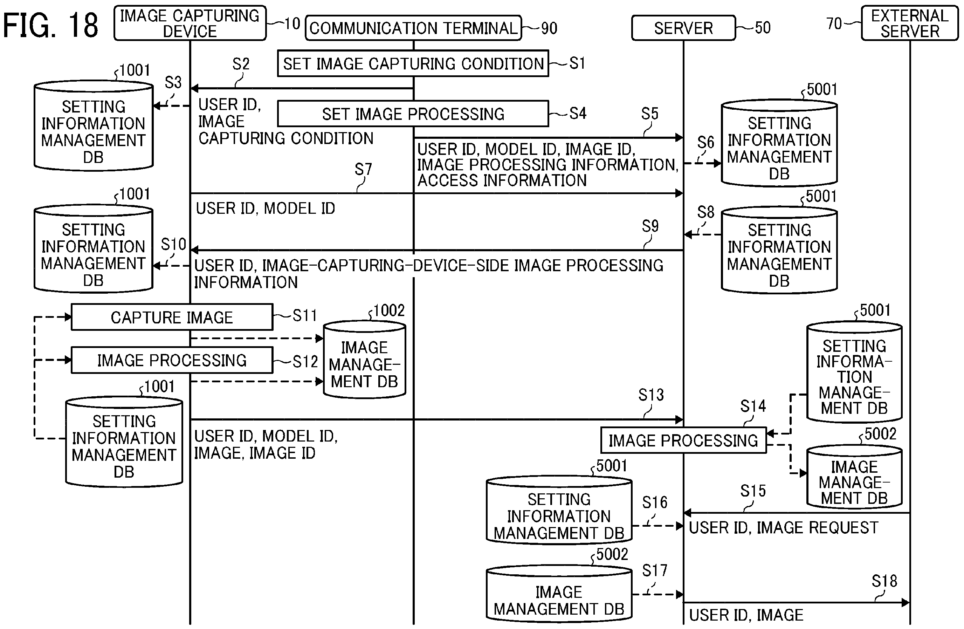

FIG. 18 is a sequence diagram illustrating an example of a process according to the present embodiment.

In response to the user inputting a user ID, for example, A0002, and information for setting image capturing conditions, the reception unit 92 of the communication terminal 90 receives the information on the set image capturing conditions (step S1).

The transmission/reception unit 91 transmits the user ID and the image capturing conditions set in step S1 to the image capturing device 10, and the transmission/reception unit 11 of the image capturing device 10 receives the user ID and the image capturing conditions transmitted from the communication terminal 90 (step S2).

The storing/reading unit 19 stores the user ID and the image capturing conditions received in step S2 in the setting information management DB 1001 in association with each other (step S3).

In response to the user inputting the user ID and information for setting a model ID, an image ID, image processing information, and access information, the reception unit 92 of the communication terminal 90 receives various types of set information (step S4). The image processing information includes the image-capturing-device-side image processing information and the server-side image processing information described with reference to FIG. 17A.

The model ID is set to, for example, D02345. The image ID is set to, for example, P0101-. The image-capturing-device-side image processing information is set to, for example, blur correction. The server-side image processing information is set to, for example, stitching processing.

The transmission/reception unit 91 transmits the user ID and the various types of information set in step S4 to the server 50, and the transmission/reception unit 51 of the server 50 receives the user ID and the various types of information transmitted from the communication terminal 90 (step S5).

The storing/reading unit 59 stores the user ID and the various types of information received in step S5 in the setting information management DB 5001 in association with each other (step S6). The storing/reading unit 59 is an example of a setting device (setting means) that sets (that is, stores) first processing information and second processing information in association with each other. The first processing information indicates first image processing to be performed by the image capturing device 10 serving as a source apparatus. The second processing information indicates second image processing to be performed by the server 50 serving as a destination apparatus.

The transmission/reception unit 11 of the image capturing device 10 transmits the user ID and the model ID to the server 50 in response to a trigger of a predetermined condition, and the transmission/reception unit 51 of the server 50 receives the user ID and the model ID transmitted from the image capturing device 10 (step S7).

The predetermined condition used as a trigger is that connection (synchronization) between the image capturing device 10 and the server 50 via the communication network 100 is enabled. In one example, the predetermined condition is that the image capturing device 10 is connected to the server 50 via the communication network 100 for the first time in cooperation with the communication terminal 90 (i.e., via the communication terminal 90). In another example, the predetermined condition is that the image capturing device 10 is activated and connected to the server 50 via the communication network 100 for the second or subsequent time. In another example, the predetermined condition is that the image capturing device 10 is reconnected to the server 50 from the state in which the image capturing device 10 remains unconnectable to the communication network 100 due to disconnection from the communication network 100 by the user or due to the communication environment.

The storing/reading unit 59 reads the image-capturing-device-side image processing information from the setting information management DB 5001 by using the user ID and the model ID received in step S7 as search keys (step S8). The transmission/reception unit 51 transmits the image-capturing-device-side image processing information read in step S8 to the image capturing device 10 in association with the user ID, and the transmission/reception unit 11 of the image capturing device 10 receives the user ID and the image-capturing-device-side image processing information transmitted from the server 50 (step S9).

The storing/reading unit 19 stores the user ID and the image-capturing-device-side image processing information received in step S9 in the setting information management DB 1001 in association with each other (step S10).

In response to a trigger of a predetermined condition, the image capturing control unit 13 performs control such that the storing/reading unit 19 reads image capturing conditions from the setting information management DB 1001 by using the user ID as a search key, the still image capturing unit 15 or the moving image capturing unit 14 captures a still image or a moving image, and the storing/reading unit 19 stores a captured image indicating the captured still image or moving image in the image management DB 1002 in association with the image ID (step S11).

The storing/reading unit 19 reads the image-capturing-device-side image processing information from the setting information management DB 1001 by using the user ID as a search key, and the image processing unit 16 subjects the still image or moving image captured in step S11 to image processing indicated by the image-capturing-device-side image processing information to generate a processed image. The storing/reading unit 19 stores the generated processed image in the image management DB 1002 in association with the image ID (step S12).

The transmission/reception unit 11 of the image capturing device 10 transmits the user ID, the model ID, the processed image generated by the image processing in step S12, and the image ID of the processed image to the server 50, and the transmission/reception unit 51 of the server 50 receives the user ID, the model ID, the processed image, and the image ID transmitted from the image capturing device 10 (step S13).

The storing/reading unit 59 reads the server-side image processing information from the setting information management DB 5001 by using the user ID and the model ID received in step S13 as search keys, and the image processing unit 57 subjects the processed image received in step S13 to image processing indicated by the server-side image processing information. The storing/reading unit 59 stores the processed image received in step S13 and the processed image on which the image processing has been performed by the image processing unit 57 in the image management DB 5002 in association with the respective image IDs (step S14).

When the transmission/reception unit 51 receives a user ID and an image request transmitted from the external server 70 (step S15), the storing/reading unit 59 reads an image ID of an image that the external server 70 is authorized to access from the setting information management DB 5001 by using the user ID received in step S15 as a search key (step S16).

The storing/reading unit 59 reads the processed image from the image management DB 5002 by using the image ID read in step S16 as a search key (step S17), and the transmission/reception unit 51 transmits the processed image read in step S17 to the external server 70 in association with the user ID (step S18).

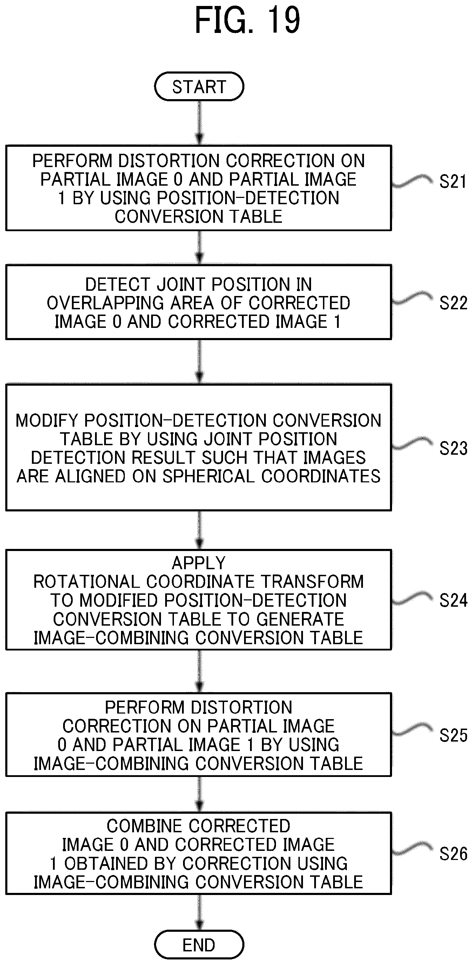

FIG. 19 is a flowchart illustrating the stitching processing as an example of image processing according to the present embodiment. FIG. 19 illustrates a process corresponding to step S12 or S14 of the sequence diagram illustrated in FIG. 18.

The image processing unit 16 or 57 performs distortion correction on partial image 0 and partial image 1 by using a position-detection conversion table. The partial image 0 and the partial image 1 are obtained by the imaging elements 103a and 103b, respectively. Accordingly, position-detection corrected image 0 and position-detection corrected image 1 are obtained. As a result, a corrected image in a spherical image format is obtained (step S21).

The position-detection conversion table is created in advance by the manufacturer or the like. The position-detection conversion table is obtained by performing a calculation based on, for example, lens design data after correcting, based on the projection relationship of lenses, distortion from an ideal lens model due to radial distortion, eccentric distortion, and the like and converting the resulting values into a table.

The image processing unit 16 or 57 detects, in an overlapping area of the position-detection corrected image 0 and the position-detection corrected image 1, a joint position between the position-detection corrected image 0 and the position-detection corrected image 1 (step S22).

Specifically, in response to input of the corrected images 0 and 1 obtained as a result of the conversion in step S21, the image processing unit 16 or 57 performs pattern matching processing to detect a joint position between the input corrected images 0 and 1 and generates detection result data.

The image processing unit 16 or 57 modifies the position-detection conversion table by using the detection result data generated in step S22 such that the images are aligned on the spherical coordinates (step S23).

Specifically, the amount of shift is determined for each coordinate value in the spherical image format by the joint position detection processing in step S22. Thus, in step S23, detection distortion correction table 0, which is used to correct the distortion of the partial image 0, is modified such that input coordinate values $(\theta, \varphi)$ are associated with $(x, y)$, which have been associated with $(\theta+\Delta\theta, \varphi+\Delta\varphi)$ before the modification. In detection distortion correction table 1, which is used to correct the distortion of the partial image 1, the association of coordinate values is not changed.

The image processing unit 16 or 57 applies a rotational coordinate transform to the position-detection conversion table modified in step S23 to generate an image-combining conversion table (step S24).

The image processing unit 16 or 57 performs distortion correction on the original partial image 0 and the original partial image 1 by using the image-combining conversion table generated in step S24 to obtain image-combining corrected image 0 and image-combining corrected image 1 (step S25).

As a result, the two partial images 0 and 1 captured by fish-eye lenses are expanded into the spherical image format. The partial image 0 captured by fish-eye lens 0 is typically mapped to substantially the right hemisphere of the sphere, and the partial image 1 captured by fish-eye lens 1 is typically mapped to substantially the left hemisphere of the sphere.

The image processing unit 16 or 57 combines the image-combining corrected image 0 and the image-combining corrected image 1 (step S26).

In the combining process, for example, a blending process is performed on an overlapping area in which images overlap each other, and pixel values of one of the images are used in an area in which pixel values of the other image are not present. Through the combining process described above, one spherical image is generated from two partial images captured by the fish-eye lenses.

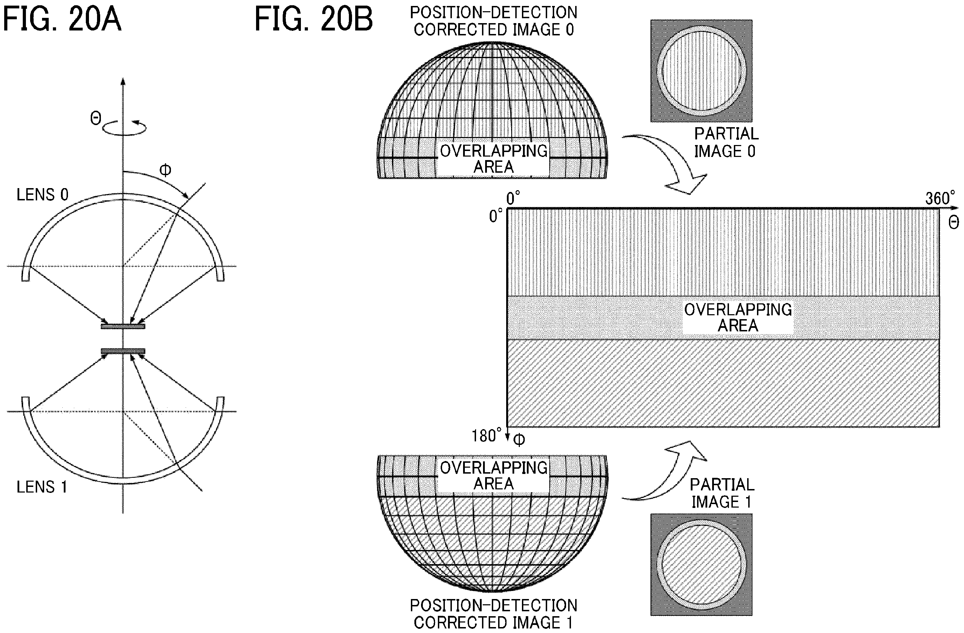

FIG. 20 illustrates mapping of two partial images captured by two fish-eye lenses to a spherical coordinate system in the position detection processing described in step S22 of FIG. 19.

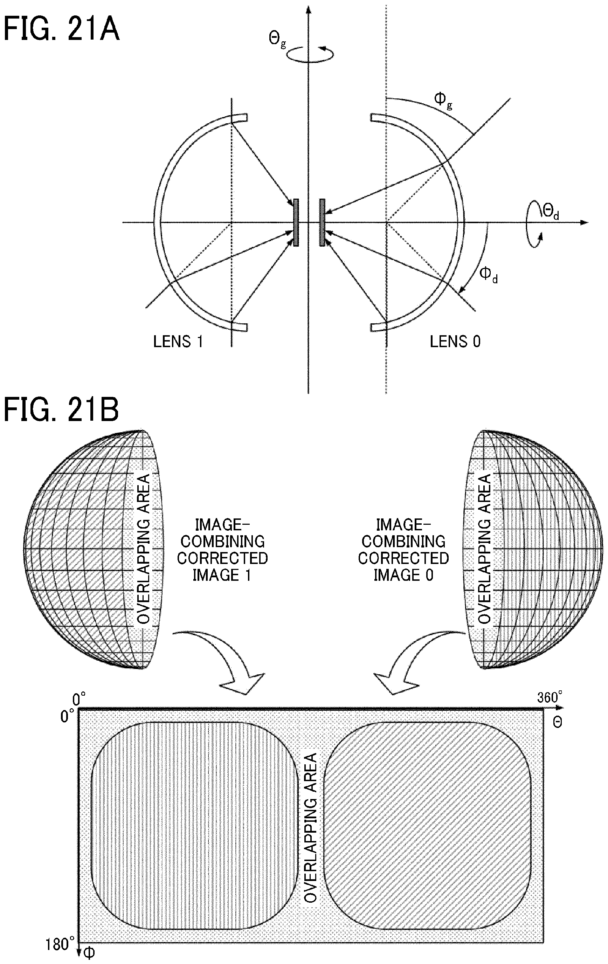

FIG. 21 illustrates mapping of the two partial images captured by the two fish-eye lenses to the spherical coordinate system in the image combining processing described in step S26 of FIG. 19.

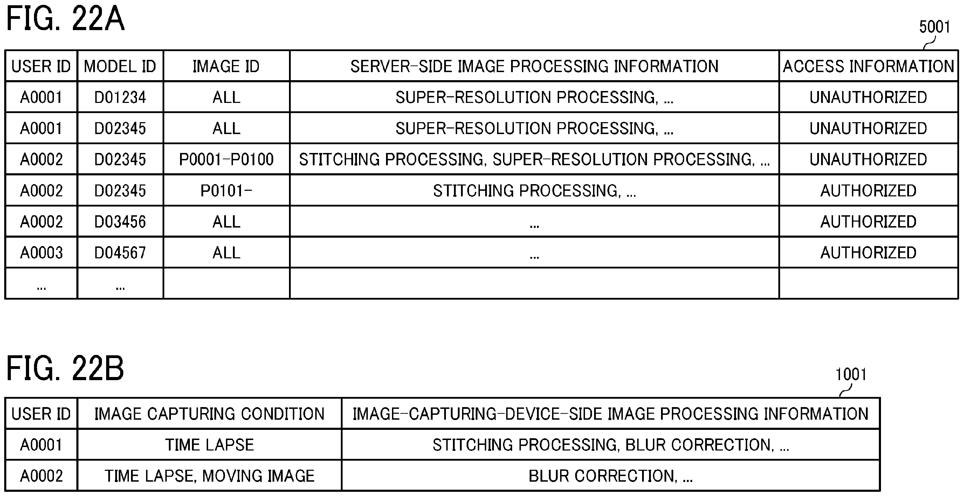

FIGs. 22A and 22B are illustrations of examples of setting information management tables according to a first modification of the present embodiment.

FIG. 22A illustrates a setting information management table included in the setting information management DB 5001 in the storage unit 5000 of the server 50 illustrated in FIG. 13.

In the setting information management table included in the setting information management DB 5001, server-side image processing information and access information are managed in association with a user ID, a model ID that identifies the image capturing device 10, and an image ID that identifies an image on which image processing is to be performed. The access information indicates whether an external server is authorized to access the images stored in the image management DB 5002.

In other words, unlike the setting information management table illustrated in FIG. 17A, the setting information management table illustrated in FIG. 22A does not store or manage the image-capturing-device-side image processing information.

FIG. 22B illustrates a setting information management table included in the setting information management DB 1001 in the storage unit 1000 of the image capturing device 10 illustrated in FIG. 13. The setting information management table illustrated in FIG. 22B has a configuration similar to that of the setting information management table illustrated in FIG. 17B.

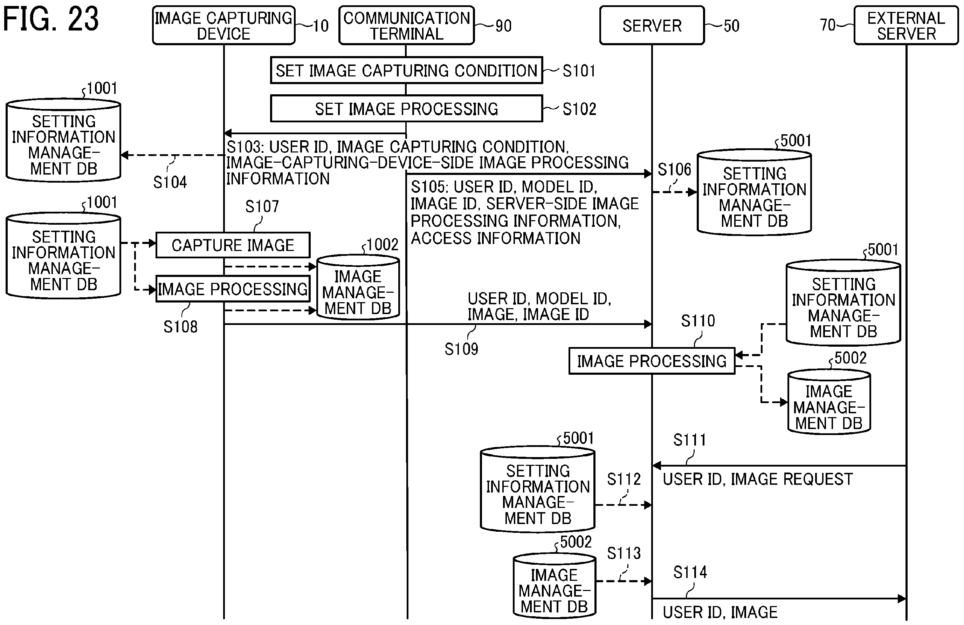

FIG. 23 is a sequence diagram illustrating an example of a process according to the first modification of the present embodiment.

In response to the user inputting a user ID and information for setting image capturing conditions, the reception unit 92 of the communication terminal 90 receives the information on the set image capturing conditions (step S101).

In response to the user inputting the user ID and information for setting a model ID, an image ID, image processing information, and access information, the reception unit 92 receives various types of set information (step S102). The image processing information includes the image-capturing-device-side image processing information and the server-side image processing information.

The reception unit 92 is an example of a setting device (setting means) that sets first processing information and second processing information in association with each other. The first processing information indicates first image processing to be performed by the image capturing device 10 serving as a source apparatus. The second processing information indicates second image processing to be performed by the server 50 serving as a destination apparatus.

The transmission/reception unit 91 transmits the user ID, the image capturing conditions set in step S101, and the image-capturing-device-side image processing information set in step S102 to the image capturing device 10, and the transmission/reception unit 11 of the image capturing device 10 receives the user ID, the image capturing conditions, and the image-capturing-device-side image processing information transmitted from the communication terminal 90 (step S103).

The storing/reading unit 19 stores the user ID, the image capturing conditions, and the image-capturing-device-side image processing information received in step S103 in the setting information management DB 1001 in association with each other (step S104).

The transmission/reception unit 91 of the communication terminal 90 transmits the user ID and the various types of information other than the image-capturing-device-side image processing information set in step S102 to the server 50, and the transmission/reception unit 51 of the server 50 receives the user ID and the various types of information transmitted from the communication terminal 90 (step S105).

The storing/reading unit 59 stores the user ID and the various types of information received in step S105 in the setting information management DB 5001 in association with each other (step S106).

The processing of steps S107 to S114 is similar to the processing of steps S11 to S18 illustrated in FIG. 18.

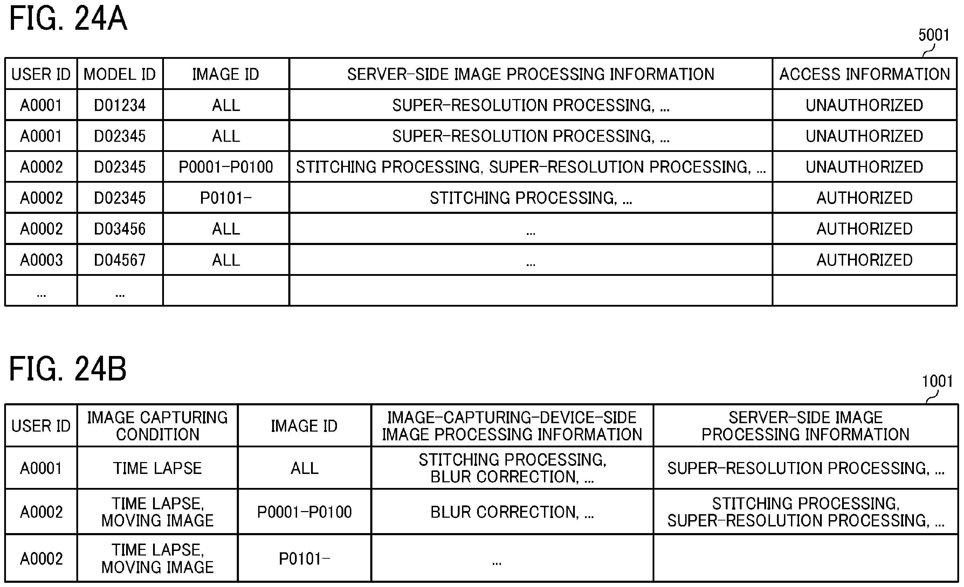

FIGs. 24A and 24B are illustrations of examples of setting information management tables according to a second modification of the present embodiment.

FIG. 24A illustrates a setting information management table included in the setting information management DB 5001 in the storage unit 5000 of the server 50 illustrated in FIG. 13. The setting information management table illustrated in FIG. 24A has a configuration similar to that of the setting information management table illustrated in FIG. 22A.

FIG. 24B illustrates a setting information management table included in the setting information management DB 1001 in the storage unit 1000 of the image capturing device 10 illustrated in FIG. 13.

In the setting information management table included in the setting information management DB 1001, image-capturing-device-side image processing information and server-side image processing information are managed in association with a user ID, image capturing conditions, and an image ID.

In other words, the setting information management table illustrated in FIG. 24B stores and manages the image ID and the server-side image processing information in addition to the setting information management table illustrated in FIG. 17B.

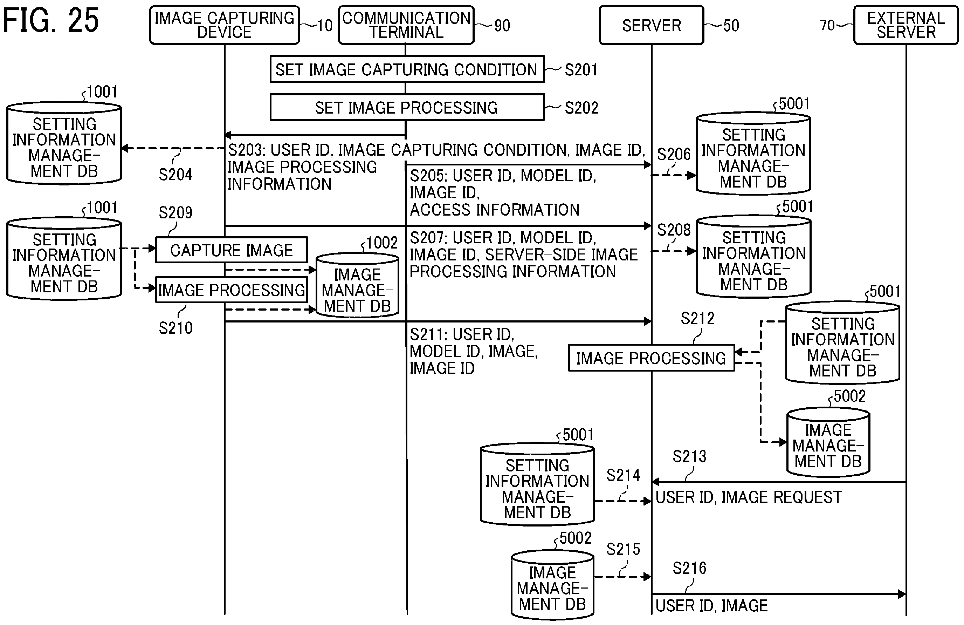

FIG. 25 is a sequence diagram illustrating an example of a process according to the second modification of the present embodiment.

In response to the user inputting a user ID and information for setting image capturing conditions, the reception unit 92 of the communication terminal 90 receives the information on the set image capturing conditions (step S201).

In response to the user inputting the user ID and information for setting a model ID, an image ID, image processing information, and access information, the reception unit 92 receives various types of set information (step S202). The image processing information includes the image-capturing-device-side image processing information and the server-side image processing information.

The transmission/reception unit 91 transmits the user ID, the image capturing conditions set in step S201, and the image ID and the image processing information set in step S202 to the image capturing device 10, and the transmission/reception unit 11 of the image capturing device 10 receives the user ID, the image capturing conditions, the image ID, and the image processing information transmitted from the communication terminal 90 (step S203).

The storing/reading unit 19 stores the user ID, the image capturing conditions, and the image processing information received in step S203 in the setting information management DB 1001 in association with each other (step S204). The storing/reading unit 19 is an example of a setting device (setting means) that sets (that is, stores) first processing information and second processing information in association with each other. The first processing information indicates first image processing to be performed by the image capturing device 10 serving as a source apparatus. The second processing information indicates second image processing to be performed by the server 50 serving as a destination apparatus.

The transmission/reception unit 91 of the communication terminal 90 transmits the user ID and the various types of information other than the image processing information set in step S202 to the server 50, and the transmission/reception unit 51 of the server 50 receives the user ID and the various types of information transmitted from the communication terminal 90 (step S205).

The storing/reading unit 59 stores the user ID and the various types of information received in step S205 in the setting information management DB 5001 in association with each other (step S206).

The transmission/reception unit 11 of the image capturing device 10 transmits the user ID, the model ID, the image ID, and the server-side image processing information to the server 50 in response to a trigger of a predetermined condition, and the transmission/reception unit 51 of the server 50 receives the user ID and the various types of information transmitted from the image capturing device 10 (step S207).

The storing/reading unit 59 stores the user ID, the model ID, and the various types of information received in step S207 in the setting information management DB 5001 in association with each other (step S208).

The processing of steps S209 to S216 is similar to the processing of steps S11 to S18 illustrated in FIG. 18.

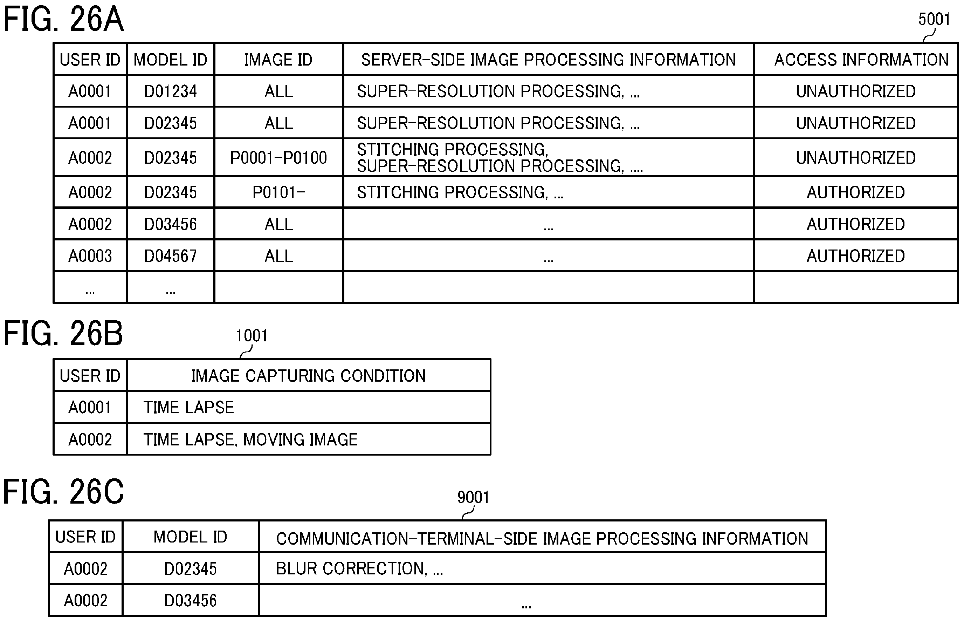

FIGs. 26A, 26B, and 26C are illustrations of examples of setting information management tables according to a third modification of the present embodiment. In the third modification, the twin function is a function for allowing the server 50 to hold information such as metadata, the configuration, and the state of the image capturing device 10 and the communication terminal 90.

FIG. 26A illustrates a setting information management table included in the setting information management DB 5001 in the storage unit 5000 of the server 50 illustrated in FIG. 13. The setting information management table illustrated in FIG. 26A has a configuration similar to that of the setting information management table illustrated in FIGs. 22A and 24A.

FIG. 26B illustrates a setting information management table included in the setting information management DB 1001 in the storage unit 1000 of the image capturing device 10 illustrated in FIG. 13.

In the setting information management table included in the setting information management DB 1001, image capturing conditions are managed in association with a user ID.

In other words, unlike the setting information management table illustrated in FIG. 17B, the setting information management table illustrated in FIG. 26B does not store or manage the image-capturing-device-side image processing information.

FIG. 26C illustrates a setting information management table included in the setting information management DB 9001 in the storage unit 9000 of the communication terminal 90 illustrated in FIG. 13.

In the setting information management table included in the setting information management DB 9001, communication-terminal-side image processing information is managed in association with a user ID and a model ID.

The communication-terminal-side image processing information is an example of first processing information indicating first image processing to be performed by the communication terminal 90 serving as a source apparatus.

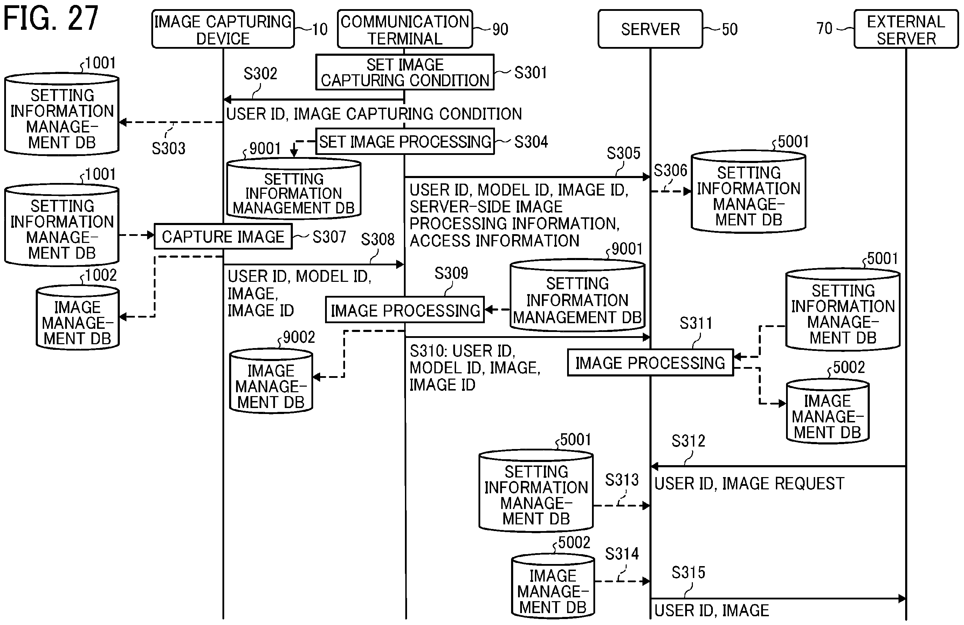

FIG. 27 is a sequence diagram illustrating an example of a process according to the third modification of the present embodiment.

In response to the user inputting a user ID and information for setting image capturing conditions, the reception unit 92 of the communication terminal 90 receives the information on the set image capturing conditions (step S301).

The transmission/reception unit 91 transmits the user ID and the image capturing conditions set in step S301 to the image capturing device 10, and the transmission/reception unit 11 of the image capturing device 10 receives the user ID and the image capturing conditions transmitted from the communication terminal 90 (step S302).

The storing/reading unit 19 stores the user ID and the image capturing conditions received in step S302 in the setting information management DB 1001 in association with each other (step S303).

In response to the user inputting the user ID and information for setting a model ID, an image ID, image processing information, and access information, the reception unit 92 of the communication terminal 90 receives various types of set information. The image processing information includes the communication-terminal-side image processing information and the server-side image processing information. The storing/reading unit 99 stores the user ID, the model ID, and the communication-terminal-side image processing information received by the reception unit 92 in the setting information management DB 9001 in association with each other (step S304).

The reception unit 92 is an example of a setting device (setting means) that sets first processing information and second processing information in association with each other. The first processing information indicates first image processing to be performed by the communication terminal 90 serving as a source apparatus. The second processing information indicates second image processing to be performed by the server 50 serving as a destination apparatus.

The transmission/reception unit 91 transmits the user ID and the various types of information other than the communication-terminal-side image processing information set in step S304 to the server 50, and the transmission/reception unit 51 of the server 50 receives the user ID and the various types of information transmitted from the communication terminal 90 (step S305).

The storing/reading unit 59 stores the user ID and the various types of information received in step S305 in the setting information management DB 5001 in association with each other (step S306).

In response to a trigger of a predetermined condition, the image capturing control unit 13 performs control such that the storing/reading unit 19 reads image capturing conditions from the setting information management DB 1001 by using the user ID as a search key, the still image capturing unit 15 or the moving image capturing unit 14 captures a still image or a moving image, and the storing/reading unit 19 stores a captured image indicating the captured still image or moving image in the image management DB 1002 in association with the image ID (step S307).

The transmission/reception unit 11 of the image capturing device 10 transmits the captured image captured in step S307 and the image ID of the captured image in association with the user ID and the model ID to the communication terminal 90, and the transmission/reception unit 91 of the communication terminal 90 receives the user ID, the model ID, the captured image, and the image ID transmitted from the image capturing device 10 (step S308).

The storing/reading unit 99 reads the communication-terminal-side image processing information from the setting information management DB 9001 by using the user ID and the model ID received in step S308 as search keys, and the image processing unit 94 subjects the captured image received in step S308 to image processing indicated by the communication-terminal-side image processing information to generate a processed image. The storing/reading unit 99 stores the generated processed image in the image management DB 9002 in association with the image ID (step S309).

The transmission/reception unit 91 transmits the user ID, the model ID, the processed image generated in step S309, and the image ID of the processed image to the server 50, and the transmission/reception unit 51 of the server 50 receives the user ID, the model ID, the processed image, and the image ID transmitted from the communication terminal 90 (step S310).

The processing of steps S311 to S315 is similar to the processing of steps S14 to S18 illustrated in FIG. 18.

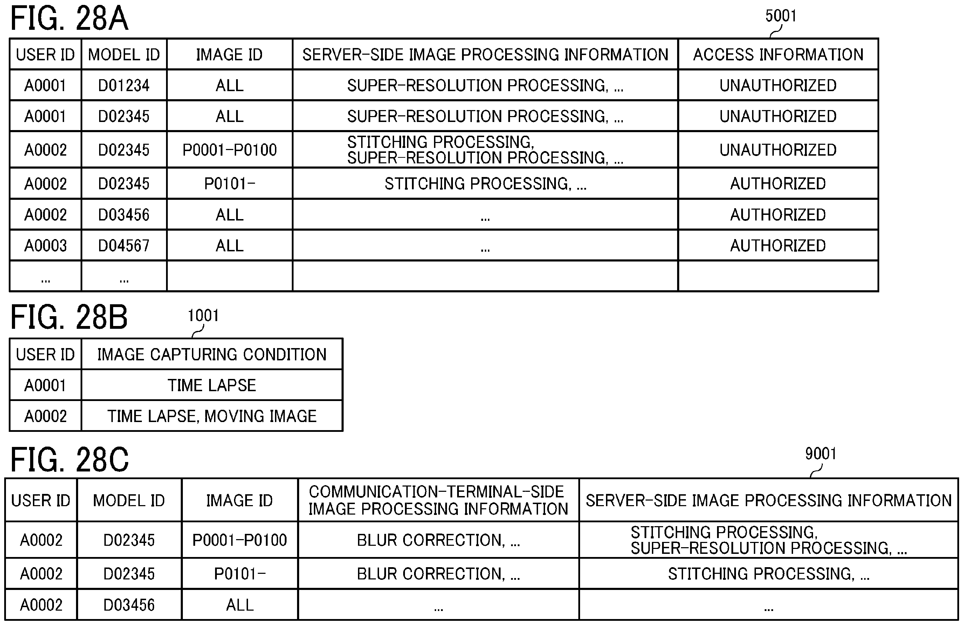

FIGs. 28A, 28B, and 28C are illustrations of examples of setting information management tables according to a fourth modification of the present embodiment.

FIG. 28A illustrates a setting information management table included in the setting information management DB 5001 in the storage unit 5000 of the server 50 illustrated in FIG. 13. The setting information management table illustrated in FIG. 28A has a configuration similar to that of the setting information management table illustrated in FIG. 26A.

FIG. 28B illustrates a setting information management table included in the setting information management DB 1001 in the storage unit 1000 of the image capturing device 10 illustrated in FIG. 13. The setting information management table illustrated in FIG. 28B has a configuration similar to that of the setting information management table illustrated in FIG. 26B.

FIG. 28C illustrates a setting information management table included in the setting information management DB 9001 in the storage unit 9000 of the communication terminal 90 illustrated in FIG. 13.

In the setting information management table included in the setting information management DB 9001, communication-terminal-side image processing information and server-side image processing information are managed in association with a user ID, a model ID, and an image ID.

A process according to the fourth modification is similar to that according to the third modification in the sequence diagram illustrated in FIG. 27; however, in step S304 of FIG. 27, the storing/reading unit 99 stores the image ID and the server-side image processing information received by the reception unit 92, in addition to the user ID, the model ID, and the communication-terminal-side image processing information received by the reception unit 92, in the setting information management DB 9001 in association with each other.

The storing/reading unit 99 is an example of a setting device (setting means) that sets first processing information and second processing information in association with each other. The first processing information indicates first image processing to be performed by the communication terminal 90 serving as a source apparatus. The second processing information indicates second image processing to be performed by the server 50 serving as a destination apparatus.

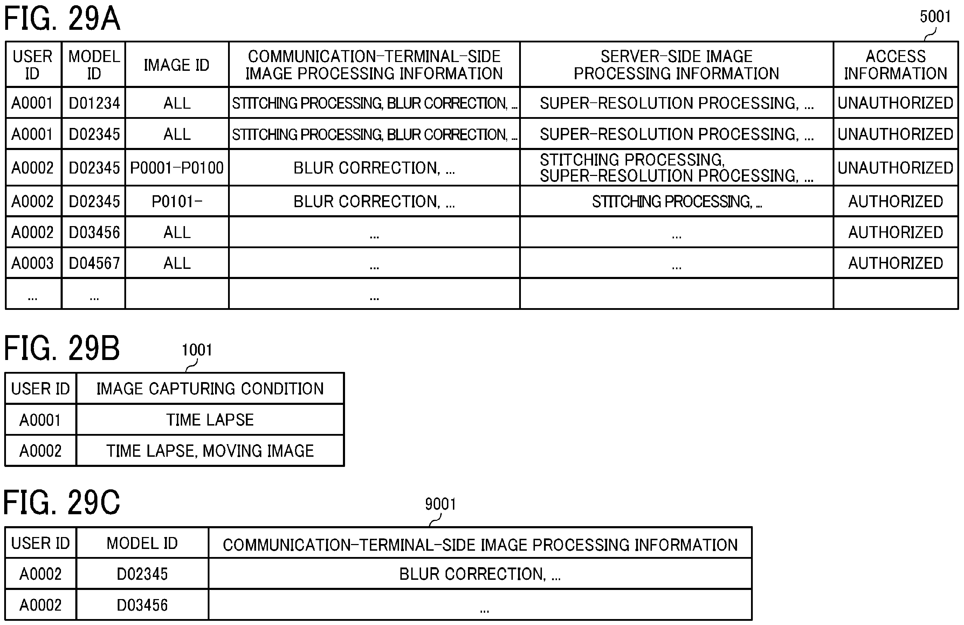

FIGs. 29A, 29B, and 29C are illustrations of examples of setting information management tables according to a fifth modification of the present embodiment.

FIG. 29A illustrates a setting information management table included in the setting information management DB 5001 in the storage unit 5000 of the server 50 illustrated in FIG. 13. The setting information management table illustrated in FIG. 29A stores and manages communication-terminal-side image processing information in addition to the setting information management table illustrated in FIG. 26A.

In the setting information management table, the various types of information illustrated in FIG. 29A are stored and managed by the storing/reading unit 59, based on, for example, information input to the reception unit 52 of the server 50 and information transmitted from an external terminal other than the communication terminal 90 and received by the transmission/reception unit 51.

The storing/reading unit 59 is an example of a setting device (setting means) that sets first processing information and second processing information in association with each other. The first processing information indicates first image processing to be performed by the communication terminal 90 serving as a source apparatus. The second processing information indicates second image processing to be performed by the server 50 serving as a destination apparatus.

FIG. 29B illustrates a setting information management table included in the setting information management DB 1001 in the storage unit 1000 of the image capturing device 10 illustrated in FIG. 13. The setting information management table illustrated in FIG. 29B has a configuration similar to that of the setting information management table illustrated in FIG. 26B.

FIG. 29C illustrates a setting information management table included in the setting information management DB 9001 in the storage unit 9000 of the communication terminal 90 illustrated in FIG. 13. The setting information management table illustrated in FIG. 29C has a configuration similar to that of the setting information management table illustrated in FIG. 26C.

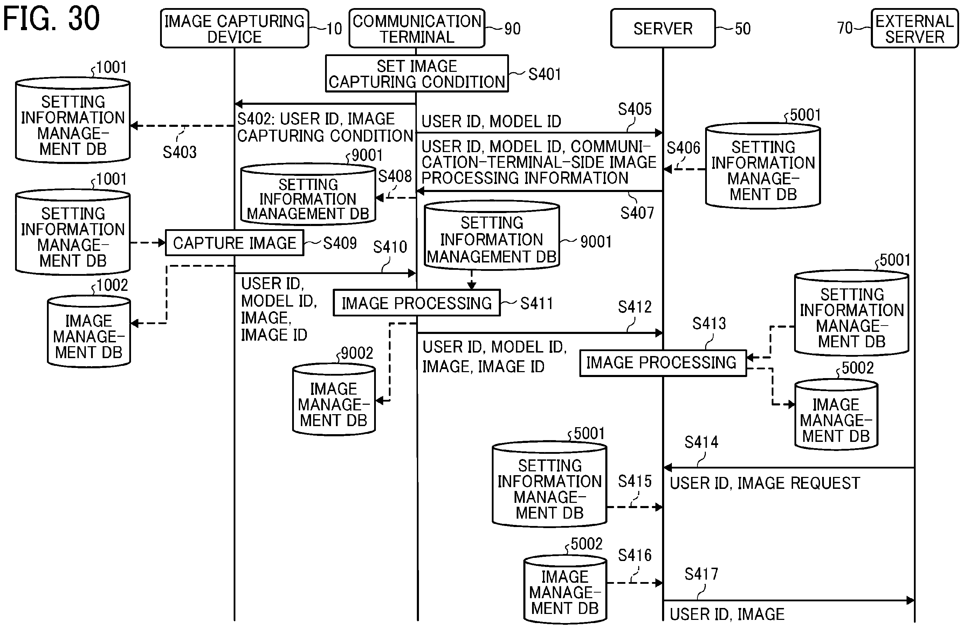

FIG. 30 is a sequence diagram illustrating an example of a process according to the fifth modification of the present embodiment.

In response to the user inputting a user ID and information for setting image capturing conditions, the reception unit 92 of the communication terminal 90 receives the information on the set image capturing conditions (step S401).

The transmission/reception unit 91 transmits the user ID and the image capturing conditions set in step S401 to the image capturing device 10, and the transmission/reception unit 11 of the image capturing device 10 receives the user ID and the image capturing conditions transmitted from the communication terminal 90 (step S402).

The storing/reading unit 19 stores the user ID and the image capturing conditions received in step S402 in the setting information management DB 1001 in association with each other (step S403).

The transmission/reception unit 91 of the communication terminal 90 transmits the user ID and the model ID to the server 50 in response to a trigger of a predetermined condition, and the transmission/reception unit 51 of the server 50 receives the user ID and the model ID transmitted from the communication terminal 90 (step S405).

The storing/reading unit 59 reads the communication-terminal-side image processing information from the setting information management DB 5001 by using the user ID and the model ID received in step S405 as search keys (step S406). The transmission/reception unit 51 transmits the communication-terminal-side image processing information read in step S406 to the communication terminal 90 in association with the user ID and the model ID, and the transmission/reception unit 91 of the communication terminal 90 receives the user ID, the model ID, and the communication-terminal-side image processing information transmitted from the server 50 (step S407).

The storing/reading unit 99 stores the user ID, the model ID, and the communication-terminal-side image processing information received in step S407 in the setting information management DB 9001 in association with each other (step S408).

The processing of steps S409 to S417 is similar to the processing of steps S307 to S315 illustrated in FIG. 27.

As described above, the image capturing device 10 or the communication terminal 90, which is an example of a source apparatus according to an embodiment of the present disclosure, and the server 50, which is an example of a destination apparatus according to an embodiment of the present disclosure, are configured to be available to, for example, but not limited to, a real estate agent that manages or sells real estate properties, a real estate agent that handles real estate properties, and a construction company that manages structures such as buildings.

In one embodiment, the present disclosure provides a monitoring camera system for monitoring a bank, a retail store where a retailer sells products, or a road or an urban area managed by a local government. According to this embodiment, in the example illustrated in FIG. 1, the image capturing device 10 is installed at a predetermined monitoring position such as a ceiling or a wall in the monitoring target such as a bank or a retail store.

When the monitoring target is a road or an urban area, the image capturing device 10 is installed in a structure such as a pedestrian bridge or an electric pole. The server 50 may be owned by an image management company that manages images or may be owned by the bank, the retail store, or the local government.

The external server 70 is owned by a security company that is in charge of security in the monitoring target and is configured to communicate with the server 50 via the communication network 100. The communication terminal 90 may be owned by the bank, the retail store, or the local government or by the security company, or may be owned by both.

In some cases, a captured image may be desirably shared in real time (instantaneously) in an application for monitoring the monitoring target. In these cases, the image capturing device 10 performs image processing with a relatively small load such that at least a user can check the resulting image, and shares the image with the server 50.

The server 50 performs image processing with a relatively large load, such as object detection processing. This configuration allows the image capturing device 10 to quickly share an image with the server 50, and enables efficient use of a captured image in the monitoring camera system.

In a first aspect, the server 50, which is an example of an information processing apparatus according to an embodiment of the present disclosure, includes the transmission/reception unit 51 and the image processing unit 57. The transmission/reception unit 51 is an example of reception means configured to receive a processed image transmitted from the image capturing device 10 or the communication terminal 90, which is an example of a source apparatus. The processed image is obtained by performing first image processing on a captured image of a subject. The first image processing is based on image-processing setting information. The image processing unit 57 performs second image processing on the processed image. The second image processing is based on the image-processing setting information.

With this configuration, the image capturing device 10 or the communication terminal 90 and the server 50 operate in cooperation to perform image processing as appropriate.

Specifically, the first image processing and the second image processing can be performed so as not to overlap, or the first image processing and the second image processing can be performed such that the first image processing is set as low-load processing and the second image processing is set as high-load processing.

According to a second aspect, in the first aspect, the image-processing setting information includes information in which the first image processing to be performed by the image capturing device 10 or the communication terminal 90 and the second image processing to be performed by the server 50 are set.

The image-processing setting information may be set in advance at the time of, for example, design, shipment, or release before the start of use of the image capturing device 10 or the communication terminal 90 and the server 50, or may be set or changed as appropriate by the user at the start of use of the image capturing device 10 or the communication terminal 90 and the server 50 or during the use of the image capturing device 10 or the communication terminal 90 and the server 50.

According to a third aspect, in the first aspect or the second aspect, the server 50 further includes the storing/reading unit 59. The storing/reading unit 59 is an example of setting means configured to set (store) the first image processing and the second image processing in association with each other.

This configuration enables the server 50 to set the first image processing and the second image processing in association with each other.

According to a fourth aspect, in the third aspect, the server 50 further includes the transmission/reception unit 51. The transmission/reception unit 51 is an example of transmission means configured to transmit first processing information indicating the first image processing to the image capturing device 10 or the communication terminal 90.

This configuration enables the image capturing device 10 or the communication terminal 90 to perform the first image processing set by the server 50.

According to a fifth aspect, in the first aspect or the second aspect, the transmission/reception unit 51 further receives second processing information indicating the second image processing from any one of the image capturing device 10 and the communication terminal 90, which are examples of the source apparatus, or from the communication terminal 90, which is an example of an external apparatus.

This configuration enables the server 50 to perform the second image processing set by the image capturing device 10 or the communication terminal 90.

According to a sixth aspect, in any one of the first aspect to the fifth aspect, the source apparatus includes the image capturing device 10 that captures an image of the subject.

With this configuration, the image capturing device 10 and the server 50 operate in cooperation to perform image processing as appropriate.

In a seventh aspect, the image capturing device 10 or the communication terminal 90, which is an example of an information processing apparatus according to an embodiment of the present disclosure, includes the image processing unit 16 or 94 and the transmission/reception unit 11 or 91. The image processing unit 16 or 94 performs first image processing on a captured image of a subject to generate a processed image. The first image processing is based on image-processing setting information. The transmission/reception unit 11 or 91 is an example of transmission means configured to transmit the processed image to the server 50, which is an example of a destination apparatus. The first image processing is associated with second image processing to be performed on the processed image by the server 50. The second image processing is based on the image-processing setting information.

According to an eighth aspect, in the seventh aspect, the image-processing setting information includes information in which the first image processing to be performed by the image capturing device 10 or the communication terminal 90 and the second image processing to be performed by the server 50 are set.

According to a ninth aspect, in the seventh aspect or the eighth aspect, the image capturing device 10 or the communication terminal 90 further includes the storing/reading unit 19 or the reception unit 92. The storing/reading unit 19 or the reception unit 92 is an example of setting means configured to set (store) the first image processing and the second image processing in association with each other.

This configuration enables the image capturing device 10 or the communication terminal 90 to set the first image processing and the second image processing in association with each other.

According to a tenth aspect, in the ninth aspect, the transmission/reception unit 11 or 91 further transmits second processing information indicating the second image processing to the server 50.

This configuration enables the server 50 to perform the second image processing set by the image capturing device 10 or the communication terminal 90.

According to an eleventh aspect, in the seventh aspect or the eighth aspect, the image capturing device 10 further includes the transmission/reception unit 11. The transmission/reception unit 11 is an example of reception means configured to receive first processing information indicating the first image processing from the server 50, which is an example of the destination apparatus, or from the communication terminal 90, which is an example of an external apparatus.

This configuration enables the image capturing device 10 to perform the first image processing set by the server 50 or the communication terminal 90.

According to a twelfth aspect, in any one of the seventh aspect to the eleventh aspect, the information processing apparatus includes the image capturing device 10 that captures an image of the subject.

With this configuration, the image capturing device 10 and the server 50 operate in cooperation to perform image processing as appropriate.

In a thirteenth aspect, an information processing method according to an embodiment of the present disclosure is executed by an information processing apparatus such as the server 50. The information processing method includes receiving (S13, S109, S211, S310, S412) a processed image transmitted from a source apparatus, for example, the image capturing device 10 or the communication terminal 90. The processed image is obtained by performing first image processing on a captured image of a subject. The first image processing is based on image-processing setting information. The information processing method further includes performing (S14, S110, S212, S311, S413) second image processing on the processed image. The second image processing is based on the image-processing setting information.

In a fourteenth aspect, an information processing method according to an embodiment of the present disclosure is executed by an information processing apparatus such as the image capturing device 10 or the communication terminal 90. The information processing method includes performing (S12, S108, S210, S309, S411) first image processing on a captured image of a subject to generate a processed image. The first image processing is based on image-processing setting information. The information processing method further includes transmitting (S13, S109, S211, S310, S412) the processed image to a destination apparatus such as the server 50. The first image processing is associated with second image processing to be performed on the processed image by the destination apparatus such as the server 50. The second image processing is based on the image-processing setting information.

In a fifteenth aspect, a program according to an embodiment of the present disclosure causes a computer to execute the information processing method of the thirteenth aspect or the fourteenth aspect.

In a sixteenth aspect, the image processing system 1, which is an example of an information processing system according to an embodiment of the present disclosure, includes the image capturing device 10 or the communication terminal 90, and the server 50. The server 50 communicates with the image capturing device 10 or the communication terminal 90. The image capturing device 10 or the communication terminal 90 includes the image processing unit 16 or 94 and the transmission/reception unit 11 or 91. The image processing unit 16 or 94 performs first image processing on a captured image of a subject to generate a processed image. The first image processing is based on image-processing setting information. The transmission/reception unit 11 or 91 transmits the processed image to the server 50. The server 50 includes the transmission/reception unit 51 and the image processing unit 57. The transmission/reception unit 51 receives the processed image transmitted from the image capturing device 10 or the communication terminal 90. The image processing unit 57 performs second image processing on the processed image. The second image processing is based on the image-processing setting information.

In a seventeenth aspect, an information processing system includes: a first information processing apparatus (source apparatus); and a second information processing apparatus (destination apparatus) communicably connected with the first information processing apparatus. The first information processing apparatus includes image processing means that performs first image processing on a captured image of a subject to generate a processed image, the first image processing being based on image-processing setting information, and transmission means that transmits the processed image to the second information processing apparatus. The second information processing apparatus includes reception means that receives the processed image transmitted from the first information processing apparatus, and image processing means that performs second image processing on the processed image, the second image processing being based on the image-processing setting information.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (50) comprising:

   reception means (51) configured to receive a processed image transmitted from a source apparatus (10, 90), the processed image being obtained by performing first image processing on a captured image of a subject, the first image processing being based on image-processing setting information; and
   image processing means (57) configured to perform second image processing on the processed image, the second image processing being based on the image-processing setting information.

2. The information processing apparatus (50) according to claim 1, wherein the image-processing setting information indicates the first image processing to be performed by the source apparatus (10, 90) and the second image processing to be performed by the information processing apparatus (50).

3. The information processing apparatus (50) according to claim 1 or 2, further comprising setting means (59) configured to store, as the image-processing setting information, the first image processing and the second image processing in association with each other.

4. The information processing apparatus (50) according to claim 3, further comprising transmission means (51) configured to transmit first processing information indicating the first image processing to the source apparatus (10, 90).

5. The information processing apparatus (50) according to claim 1 or 2,
   wherein the reception means (51) is configured to further receive second processing information indicating the second image processing from the source apparatus (10, 90) or an external apparatus.

6. The information processing apparatus (50) according to any one of claims 1 to 5, wherein the captured image is captured by the source apparatus (10).

7. An information processing apparatus (10, 90) comprising:

image processing means (16, 94) configured to perform first image processing on a captured image of a subject to generate a processed image, the first image processing being based on image-processing setting information; and transmission means (11, 91) configured to transmit the processed image to a destination apparatus (50), wherein the first image processing is associated with second image processing to be performed on the processed image by the destination apparatus (50), the second image processing being based on the image-processing setting information.

8. The information processing apparatus (10, 90) according to claim 7, wherein the image-processing setting information indicates the first image processing to be performed by the information processing apparatus (10, 90) and the second image processing to be performed by the destination apparatus (50).

9. The information processing apparatus (10, 90) according to claim 7 or 8, further comprising setting means (19) configured to store, as the image-processing setting information, the first image processing and the second image processing in association with each other.

10. The information processing apparatus (10, 90) according to claim 9, wherein the transmission means (11, 91) is configured to further transmit second processing information indicating the second image processing to the destination apparatus (50).

11. The information processing apparatus (10, 90) according to claim 7 or 8, further comprising reception means (11) configured to receive first processing information indicating the first image processing from the destination apparatus (50) or an external apparatus.

12. The information processing apparatus (10, 90) according to any one of claims 7 to 11, wherein the captured image is captured by the information processing apparatus (10).

13. An information processing system (1) comprising:

the information processing apparatus (50) according to any one of claims 1 to 6; and the source apparatus (10, 90) communicably connected with the information processing apparatus (50), the source apparatus (10, 90) including:

image processing means (16, 94) configured to perform the first image processing on the captured image of the subject to generate the processed image; and transmission means (11, 91) configured to transmit the processed image to the information processing apparatus (50).

14. An information processing method executed by an information processing apparatus, the information processing method comprising:

receiving (S13, S109, S211, S310, S412) a processed image transmitted from a source apparatus, the processed image being obtained by performing first image processing on a captured image of a subject, the first image processing being based on image-processing setting information; and performing (S14, S110, S212, S311, S413) second image processing on the processed image, the second image processing being based on the image-processing setting information.

15. An information processing method executed by an information processing apparatus, the information processing method comprising:

performing (S12, S108, S210, S309, S411) first image processing on a captured image of a subject to generate a processed image, the first image processing being based on image-processing setting information; and transmitting (S13, S109, S211, S310, S412) the processed image to a destination apparatus, wherein the first image processing is associated with second image processing to be performed on the processed image by the destination apparatus, the second image processing being based on the image-processing setting information.

# FIG. 1

COMMUNICATION NETWORK

FIG. 2

# FIG. 3A

# FIG. 3B

HEMISPHERICAL IMAGE (FRONT)

HEMISPHERICAL IMAGE (BACK)

# FIG. 3C

CAPTURED IMAGE (EQUIRECTANGULAR PROJECTION IMAGE EC)

FIG. 4A — EQUIRECTANGULAR PROJECTION IMAGE EC

FIG. 4B — SPHERICAL IMAGE CE

# FIG. 5

VIRTUAL
CAMERA IC

VIRTUAL
CAMERA IC

SPHERICAL
IMAGE CE
(SPHERE CS)

PREDETERMINED-AREA IMAGE Q
(PREDETERMINED AREA T)

SPHERICAL IMAGE CE
(SPHERE CS)

PREDETERMINED-AREA IMAGE Q
(PREDETERMINED AREA T)

(FRONT)

(SIDE)

PREDETERMINED-AREA IMAGE Q
(PREDETERMINED AREA T)

SPHERICAL IMAGE CE
(SPHERE CS)

VIRTUAL
CAMERA IC

(TOP)

# FIG. 6

# FIG. 7

SPHERICAL IMAGE CE (SPHERE CS)

PREDETERMINED-AREA IMAGE Q (PREDETERMINED AREA T)

EP 4 412 191 A1

## FIG. 8A

## FIG. 8B

# FIG. 9A

LATITUDE $\phi$

−90

CT2

LONGI-
TUDE
$\theta$

−180

0

0

+180

+90

CT1

# FIG. 9B

y

750

0

1500

x

FIG. 10A

FIG. 10B

# FIG. 11

IMAGING UNIT 101

LENS 102a — IMAGING ELEMENT (1) 103a

LENS 102b — IMAGING ELEMENT (2) 103b

IMAGE PROCESSOR 104

IMAGING CONTROLLER 105

MICROPHONE 108 → AUDIO PROCESSOR 109

110

- CPU 111
- ROM 112
- SRAM 113
- DRAM 114
- OPERATION UNIT 115
- INPUT/OUTPUT I/F 116
- SHORT-RANGE COMMUNICATION CIRCUIT 117
- ELECTRONIC COMPASS 118
- GYRO SENSOR 119
- ACCELERATION SENSOR 120
- NETWORK I/F 121

ANTENNA 117a

10

EP 4 412 191 A1

# FIG. 12

# FIG. 13

IMAGE PROCESSING SYSTEM 1

**SERVER** 50 / 5000

STORAGE UNIT

- TWIN MANAGE-MENT DB (5003)
- SETTING INFORMATION MANAGEMENT DB (5001)
- IMAGE MANAGE-MENT DB (5002)

57 — IMAGE PROCESSING UNIT
55 — DETERMINATION UNIT
52 — RECEPTION UNIT

STORING/READING UNIT (59)
TRANSMISSION/RECEPTION UNIT (51)

EXTERNAL SERVER 70

COMMUNICATION NETWORK 100

**IMAGE CAPTURING DEVICE** 10

12 — OPERATION RECEPTION UNIT
14 — MOVING IMAGE CAPTURING UNIT
16 — IMAGE PROCESSING UNIT
19 — STORING/READING UNIT

TRANSMISSION/RECEPTION UNIT (11)
IMAGE CAPTURING CONTROL UNIT (13)
STILL IMAGE CAPTURING UNIT (15)

STORAGE UNIT 1000

- TWIN MANAGE-MENT DB (1003)
- IMAGE MANAGE-MENT DB (1002)
- SETTING INFORMATION MANAGEMENT DB (1001)

**COMMUNICATION TERMINAL** 90

91 — TRANSMISSION/RECEPTION UNIT
92 — RECEPTION UNIT
93 — DISPLAY CONTROL UNIT
94 — IMAGE PROCESSING UNIT

STORING/READING UNIT (99)

STORAGE UNIT 9000

- SETTING INFORMA-TION MANAGE-MENT DB (9001)
- IMAGE MANAGE-MENT DB (9002)

EP 4 412 191 A1

# FIG. 14

5003

| TwinID | USER ID | MODEL ID |
|--------|---------|----------|
| Twin1 | A0001 | D01234 |
| Twin2 | A0002<br>A0003 | D02345 |

# FIG. 15

SET TWIN — S501

USER ID, TWIN ID — S502

USER ID, TWIN ID — S503

TWIN ID, MODEL ID — S504

DETERMINE TWIN REGISTRATION — S505

USER ID, TWIN ID, REGISTRATION PERMISSION — S506

S507

USER ID, TWIN ID, MODEL ID, REGISTRATION COMPLETION — S508

S509

IMAGE CAPTURING DEVICE — 10

COMMUNICATION TERMINAL — 90

SERVER — 50

TWIN MANAGEMENT DB — 1003

TWIN MANAGEMENT DB — 5003

EP 4 412 191 A1

# FIG. 16

```
        ┌──────────┐
        │  START   │
        └─────┬────┘
              │
              ▼         S511
         ╱─────────────╲
        ╱  TWIN AVAILABLE IN ╲      NO
        ╲  SERVICE IN USE?   ╱─────────────────┐
         ╲─────────────────╱                    │
              │ YES                              │
              ▼         S512                     │
         ╱─────────────╲                         │
        ╱     TWIN      ╲                        │
       ╱  AVAILABLE TO   ╲      NO               │
       ╲ IMAGE CAPTURING ╱──────────────┐       │
        ╲    DEVICE?    ╱                │       │
         ╲─────────────╱                 │       │
              │ YES    S513              │       │
              ▼                          ▼       ▼
   ┌─────────────────────┐      ┌─────────────────────┐  S514
   │   PERMIT TWIN       │      │    REJECT TWIN      │
   │   REGISTRATION      │      │    REGISTRATION     │
   └──────────┬──────────┘      └──────────┬──────────┘
              │                            │
              │◄───────────────────────────┘
              ▼
        ┌──────────┐
        │   END    │
        └──────────┘
```

# FIG. 17A

5001

| USER ID | MODEL ID | IMAGE ID | IMAGE-CAPTURING-DEVICE-SIDE IMAGE PROCESSING INFORMATION | SERVER-SIDE IMAGE PROCESSING INFORMATION | ACCESS INFORMATION |
|---------|----------|----------|----------------------------------------------------------|------------------------------------------|--------------------|
| A0001 | D01234 | ALL | STITCHING PROCESSING, BLUR CORRECTION, … | SUPER-RESOLUTION PROCESSING, … | UNAUTHORIZED |
| A0001 | D02345 | ALL | STITCHING PROCESSING, BLUR CORRECTION, … | SUPER-RESOLUTION PROCESSING, … | UNAUTHORIZED |
| A0002 | D02345 | P0001-P0100 | BLUR CORRECTION, … | STITCHING PROCESSING, SUPER-RESOLUTION PROCESSING, … | UNAUTHORIZED |
| A0002 | D02345 | P0101- | BLUR CORRECTION, … | STITCHING PROCESSING, … | AUTHORIZED |
| A0002 | D03456 | ALL | … | … | AUTHORIZED |
| A0003 | D04567 | ALL | … | … | AUTHORIZED |
| … | … | | … | | |

# FIG. 17B

1001

| USER ID | IMAGE CAPTURING CONDITION | IMAGE-CAPTURING-DEVICE-SIDE IMAGE PROCESSING INFORMATION |
|---------|---------------------------|----------------------------------------------------------|
| A0001 | TIME LAPSE | STITCHING PROCESSING, BLUR CORRECTION, … |
| A0002 | TIME LAPSE, MOVING IMAGE | BLUR CORRECTION, … |

EP 4 412 191 A1

# FIG. 18

EP 4 412 191 A1

# FIG. 19

START

PERFORM DISTORTION CORRECTION ON PARTIAL IMAGE 0 AND PARTIAL IMAGE 1 BY USING POSITION-DETECTION CONVERSION TABLE — S21

DETECT JOINT POSITION IN OVERLAPPING AREA OF CORRECTED IMAGE 0 AND CORRECTED IMAGE 1 — S22

MODIFY POSITION-DETECTION CONVERSION TABLE BY USING JOINT POSITION DETECTION RESULT SUCH THAT IMAGES ARE ALIGNED ON SPHERICAL COORDINATES — S23

APPLY ROTATIONAL COORDINATE TRANSFORM TO MODIFIED POSITION-DETECTION CONVERSION TABLE TO GENERATE IMAGE-COMBINING CONVERSION TABLE — S24

PERFORM DISTORTION CORRECTION ON PARTIAL IMAGE 0 AND PARTIAL IMAGE 1 BY USING IMAGE-COMBINING CONVERSION TABLE — S25

COMBINE CORRECTED IMAGE 0 AND CORRECTED IMAGE 1 OBTAINED BY CORRECTION USING IMAGE-COMBINING CONVERSION TABLE — S26

END

# FIG. 20A

# FIG. 20B

POSITION-DETECTION
CORRECTED IMAGE 0

PARTIAL
IMAGE 0

OVERLAPPING
AREA

OVERLAPPING
AREA

POSITION-DETECTION
CORRECTED IMAGE 1

PARTIAL
IMAGE 1

FIG. 21A

FIG. 21B

# FIG. 22A

5001

| USER ID | MODEL ID | IMAGE ID | SERVER-SIDE IMAGE PROCESSING INFORMATION | ACCESS INFORMATION |
|---|---|---|---|---|
| A0001 | D01234 | ALL | SUPER-RESOLUTION PROCESSING, ... | UNAUTHORIZED |
| A0001 | D02345 | ALL | SUPER-RESOLUTION PROCESSING, ... | UNAUTHORIZED |
| A0002 | D02345 | P0001-P0100 | STITCHING PROCESSING, SUPER-RESOLUTION PROCESSING, ... | UNAUTHORIZED |
| A0002 | D02345 | P0101- | STITCHING PROCESSING, ... | AUTHORIZED |
| A0002 | D03456 | ALL | ... | AUTHORIZED |
| A0003 | D04567 | ALL | ... | AUTHORIZED |
| ... | ... | | | |

# FIG. 22B

1001

| USER ID | IMAGE CAPTURING CONDITION | IMAGE-CAPTURING-DEVICE-SIDE IMAGE PROCESSING INFORMATION |
|---|---|---|
| A0001 | TIME LAPSE | STITCHING PROCESSING, BLUR CORRECTION, ... |
| A0002 | TIME LAPSE, MOVING IMAGE | BLUR CORRECTION, ... |

EP 4 412 191 A1

# FIG. 23

SETTING INFORMATION MANAGEMENT DB — 1001

IMAGE CAPTURING DEVICE — 10

COMMUNICATION TERMINAL — 90

SERVER — 50

70 — EXTERNAL SERVER

SET IMAGE CAPTURING CONDITION — S101

SET IMAGE PROCESSING — S102

S103: USER ID, IMAGE CAPTURING CONDITION, IMAGE-CAPTURING-DEVICE-SIDE IMAGE PROCESSING INFORMATION

S104

S106

SETTING INFORMATION MANAGEMENT DB — 5001

S105: USER ID, MODEL ID, IMAGE ID, SERVER-SIDE IMAGE PROCESSING INFORMATION, ACCESS INFORMATION

SETTING INFORMATION MANAGEMENT DB — 1001

S107

CAPTURE IMAGE

IMAGE MANAGEMENT DB — 1002

SETTING INFORMATION MANAGEMENT DB — 5001

IMAGE PROCESSING

S108

USER ID, MODEL ID, IMAGE, IMAGE ID

S110

IMAGE PROCESSING

S109

IMAGE MANAGEMENT DB — 5002

SETTING INFORMATION MANAGEMENT DB — 5001

S112

S111

USER ID, IMAGE REQUEST

IMAGE MANAGEMENT DB — 5002

S113

S114

USER ID, IMAGE

EP 4 412 191 A1

# FIG. 24A

5001

| USER ID | MODEL ID | IMAGE ID | SERVER-SIDE IMAGE PROCESSING INFORMATION | ACCESS INFORMATION |
|---|---|---|---|---|
| A0001 | D01234 | ALL | SUPER-RESOLUTION PROCESSING, ... | UNAUTHORIZED |
| A0001 | D02345 | ALL | SUPER-RESOLUTION PROCESSING, ... | UNAUTHORIZED |
| A0002 | D02345 | P0001-P0100 | STITCHING PROCESSING, SUPER-RESOLUTION PROCESSING, ... | UNAUTHORIZED |
| A0002 | D02345 | P0101- | STITCHING PROCESSING, ... | AUTHORIZED |
| A0002 | D03456 | ALL | ... | AUTHORIZED |
| A0003 | D04567 | ALL | ... | AUTHORIZED |
| ... | ... | | | |

# FIG. 24B

1001

| USER ID | IMAGE CAPTURING CONDITION | IMAGE ID | IMAGE-CAPTURING-DEVICE-SIDE IMAGE PROCESSING INFORMATION | SERVER-SIDE IMAGE PROCESSING INFORMATION |
|---|---|---|---|---|
| A0001 | TIME LAPSE | ALL | STITCHING PROCESSING, BLUR CORRECTION, ... | SUPER-RESOLUTION PROCESSING, ... |
| A0002 | TIME LAPSE, MOVING IMAGE | P0001-P0100 | BLUR CORRECTION, ... | STITCHING PROCESSING, SUPER-RESOLUTION PROCESSING, ... |
| A0002 | TIME LAPSE, MOVING IMAGE | P0101- | ... | |

EP 4 412 191 A1

# FIG. 25

| IMAGE CAPTURING DEVICE ~10 | COMMUNICATION TERMINAL ~90 | SERVER ~50 | 70~ EXTERNAL SERVER |

SET IMAGE CAPTURING CONDITION ~ S201

SET IMAGE PROCESSING ~ S202

1001 SETTING INFORMATION MANAGE-MENT DB

S203: USER ID, IMAGE CAPTURING CONDITION, IMAGE ID, IMAGE PROCESSING INFORMATION

S204

S206

5001 SETTING INFORMATION MANAGE-MENT DB

S205: USER ID, MODEL ID, IMAGE ID, ACCESS INFORMATION

1001 SETTING INFORMATION MANAGE-MENT DB

S209

CAPTURE IMAGE

1002 IMAGE MANAGE-MENT DB

IMAGE PROCESSING

S210

S207: USER ID, MODEL ID, IMAGE ID, SERVER-SIDE IMAGE PROCESSING INFORMATION

S208

5001 SETTING INFORMATION MANAGE-MENT DB

S212

IMAGE PROCESSING

5001 SETTING INFORMATION MANAGE-MENT DB

S211: USER ID, MODEL ID, IMAGE, IMAGE ID

5002 IMAGE MANAGE-MENT DB

5001 SETTING INFORMATION MANAGE-MENT DB

S214

S213

USER ID, IMAGE REQUEST

5002 IMAGE MANAGE-MENT DB

S215

S216

USER ID, IMAGE

EP 4 412 191 A1

# FIG. 26A

5001

| USER ID | MODEL ID | IMAGE ID | SERVER-SIDE IMAGE PROCESSING INFORMATION | ACCESS INFORMATION |
|---|---|---|---|---|
| A0001 | D01234 | ALL | SUPER-RESOLUTION PROCESSING, ... | UNAUTHORIZED |
| A0001 | D02345 | ALL | SUPER-RESOLUTION PROCESSING, ... | UNAUTHORIZED |
| A0002 | D02345 | P0001-P0100 | STITCHING PROCESSING, SUPER-RESOLUTION PROCESSING, .... | UNAUTHORIZED |
| A0002 | D02345 | P0101- | STITCHING PROCESSING, ... | AUTHORIZED |
| A0002 | D03456 | ALL | ... | AUTHORIZED |
| A0003 | D04567 | ALL | ... | AUTHORIZED |
| ... | ... | | | |

# FIG. 26B

1001

| USER ID | IMAGE CAPTURING CONDITION |
|---|---|
| A0001 | TIME LAPSE |
| A0002 | TIME LAPSE, MOVING IMAGE |

# FIG. 26C

9001

| USER ID | MODEL ID | COMMUNICATION-TERMINAL-SIDE IMAGE PROCESSING INFORMATION |
|---|---|---|
| A0002 | D02345 | BLUR CORRECTION, ... |
| A0002 | D03456 | ... |

EP 4 412 191 A1

# FIG. 27

SETTING INFORMATION MANAGEMENT DB 1001

IMAGE CAPTURING DEVICE 10

COMMUNICATION TERMINAL 90

SERVER 50

70 EXTERNAL SERVER

S301 SET IMAGE CAPTURING CONDITION

S302

USER ID, IMAGE CAPTURING CONDITION

S303

S304 SET IMAGE PROCESSING

SETTING INFORMATION MANAGEMENT DB 9001

S305

S306 SETTING INFORMATION MANAGEMENT DB 5001

USER ID, MODEL ID, IMAGE ID, SERVER-SIDE IMAGE PROCESSING INFORMATION, ACCESS INFORMATION

SETTING INFORMATION MANAGEMENT DB 1001

CAPTURE IMAGE S307  S308

IMAGE MANAGEMENT DB 1002

USER ID, MODEL ID, IMAGE, IMAGE ID

S309 IMAGE PROCESSING

SETTING INFORMATION MANAGEMENT DB 9001

SETTING INFORMATION MANAGEMENT DB 5001

IMAGE MANAGEMENT DB 9002

S310: USER ID, MODEL ID, IMAGE, IMAGE ID

S311 IMAGE PROCESSING

IMAGE MANAGEMENT DB 5002

SETTING INFORMATION MANAGEMENT DB 5001

S312

S313

USER ID, IMAGE REQUEST

IMAGE MANAGEMENT DB 5002

S314

S315

USER ID, IMAGE

EP 4 412 191 A1

# FIG. 28A

5001

| USER ID | MODEL ID | IMAGE ID | SERVER-SIDE IMAGE PROCESSING INFORMATION | ACCESS INFORMATION |
|---------|----------|----------|------------------------------------------|--------------------|
| A0001 | D01234 | ALL | SUPER-RESOLUTION PROCESSING, ... | UNAUTHORIZED |
| A0001 | D02345 | ALL | SUPER-RESOLUTION PROCESSING, ... | UNAUTHORIZED |
| A0002 | D02345 | P0001-P0100 | STITCHING PROCESSING, SUPER-RESOLUTION PROCESSING, ... | UNAUTHORIZED |
| A0002 | D02345 | P0101- | STITCHING PROCESSING, ... | AUTHORIZED |
| A0002 | D03456 | ALL | ... | AUTHORIZED |
| A0003 | D04567 | ALL | ... | AUTHORIZED |
| ... | ... | | | |

# FIG. 28B

1001

| USER ID | IMAGE CAPTURING CONDITION |
|---------|---------------------------|
| A0001 | TIME LAPSE |
| A0002 | TIME LAPSE, MOVING IMAGE |

# FIG. 28C

9001

| USER ID | MODEL ID | IMAGE ID | COMMUNICATION-TERMINAL-SIDE IMAGE PROCESSING INFORMATION | SERVER-SIDE IMAGE PROCESSING INFORMATION |
|---------|----------|----------|--------------------------------------------------------|------------------------------------------|
| A0002 | D02345 | P0001-P0100 | BLUR CORRECTION, ... | STITCHING PROCESSING, SUPER-RESOLUTION PROCESSING, ... |
| A0002 | D02345 | P0101- | BLUR CORRECTION, ... | STITCHING PROCESSING, ... |
| A0002 | D03456 | ALL | ... | ... |

# FIG. 29A

5001

| USER ID | MODEL ID | IMAGE ID | COMMUNICATION-TERMINAL-SIDE IMAGE PROCESSING INFORMATION | SERVER-SIDE IMAGE PROCESSING INFORMATION | ACCESS INFORMATION |
|---|---|---|---|---|---|
| A0001 | D01234 | ALL | STITCHING PROCESSING, BLUR CORRECTION, ... | SUPER-RESOLUTION PROCESSING, ... | UNAUTHORIZED |
| A0001 | D02345 | ALL | STITCHING PROCESSING, BLUR CORRECTION, ... | SUPER-RESOLUTION PROCESSING, ... | UNAUTHORIZED |
| A0002 | D02345 | P0001-P0100 | BLUR CORRECTION, ... | STITCHING PROCESSING, SUPER-RESOLUTION PROCESSING, ... | UNAUTHORIZED |
| A0002 | D02345 | P0101- | BLUR CORRECTION, ... | STITCHING PROCESSING, ... | AUTHORIZED |
| A0002 | D03456 | ALL | ... | ... | AUTHORIZED |
| A0003 | D04567 | ALL | ... | ... | AUTHORIZED |
| ... | ... | | ... | | |

# FIG. 29B

1001

| USER ID | IMAGE CAPTURING CONDITION |
|---|---|
| A0001 | TIME LAPSE |
| A0002 | TIME LAPSE, MOVING IMAGE |

# FIG. 29C

9001

| USER ID | MODEL ID | COMMUNICATION-TERMINAL-SIDE IMAGE PROCESSING INFORMATION |
|---|---|---|
| A0002 | D02345 | BLUR CORRECTION, ... |
| A0002 | D03456 | ... |

EP 4 412 191 A1

# FIG. 30

IMAGE CAPTURING DEVICE ~10   COMMUNICATION TERMINAL ~90   SERVER ~50   70~ EXTERNAL SERVER

1001 SETTING INFORMATION MANAGEMENT DB

SET IMAGE CAPTURING CONDITION ~S401

S402: USER ID, IMAGE CAPTURING CONDITION

S403

USER ID, MODEL ID   S405

USER ID, MODEL ID, COMMUNICATION-TERMINAL-SIDE IMAGE PROCESSING INFORMATION   S406

5001 SETTING INFORMATION MANAGEMENT DB

1001 SETTING INFORMATION MANAGEMENT DB

9001 SETTING INFORMATION MANAGEMENT DB   S408

S407

CAPTURE IMAGE ~S409   S410

1002 IMAGE MANAGEMENT DB

9001 SETTING INFORMATION MANAGEMENT DB

USER ID, MODEL ID, IMAGE, IMAGE ID

IMAGE PROCESSING ~S411   S412

5001 SETTING INFORMATION MANAGEMENT DB

9002 IMAGE MANAGEMENT DB

USER ID, MODEL ID, IMAGE, IMAGE ID

S413 IMAGE PROCESSING

5002 IMAGE MANAGEMENT DB

5001 SETTING INFORMATION MANAGEMENT DB   S415

S414

USER ID, IMAGE REQUEST

5002 IMAGE MANAGEMENT DB   S416

S417

USER ID, IMAGE

EP 4 412 191 A1

Europäisches
Patentamt

European
Patent Office

Office européen
des brevets

# EUROPEAN SEARCH REPORT

Application Number

EP 24 15 3843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/170779 A1 (TANABE AKIHIRO [JP]) 3 August 2006 (2006-08-03) * abstract * * paragraphs [0021], [0089]; claim 1; figures 1,2,3,4,5 * | 1-15 | INV. H04N1/00 G06T3/4038 |
| A | US 2021/090211 A1 (TAKEDA TAKAFUMI [JP] ET AL) 25 March 2021 (2021-03-25) * abstract * | 1-15 | |
| A | WO 2022/180459 A1 (RICOH CO LTD [JP]; ODAMAKI MAKOTO [JP]; FUJIKI HIROCHIKA [JP]) 1 September 2022 (2022-09-01) * abstract * | 1-15 | |
| A | JP 2018 151778 A (RICOH CO LTD) 27 September 2018 (2018-09-27) * abstract * | 1-15 | |

|  |
|---|
| TECHNICAL FIELDS SEARCHED (IPC) |
| H04N G06T |

The present search report has been drawn up for all claims

| Place of search | Date of completion of the search | Examiner |
|---|---|---|
| The Hague | 19 June 2024 | Stoffers, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 3843

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2024

| Patent document cited in search report | | Publication date | Patent family member(s) | | Publication date |
|---|---|---|---|---|---|
| US 2006170779 | A1 | 03-08-2006 | JP | 4976654 B2 | 18-07-2012 |
| | | | JP | 2006211505 A | 10-08-2006 |
| | | | US | 2006170779 A1 | 03-08-2006 |
| US 2021090211 | A1 | 25-03-2021 | JP | 7368707 B2 | 25-10-2023 |
| | | | JP | 2021052289 A | 01-04-2021 |
| | | | US | 2021090211 A1 | 25-03-2021 |
| WO 2022180459 | A1 | 01-09-2022 | EP | 4298599 A1 | 03-01-2024 |
| | | | JP | 2022130180 A | 06-09-2022 |
| | | | US | 2024087157 A1 | 14-03-2024 |
| | | | WO | 2022180459 A1 | 01-09-2022 |
| JP 2018151778 | A | 27-09-2018 | JP | 6841098 B2 | 10-03-2021 |
| | | | JP | 2018151778 A | 27-09-2018 |

EPO FORM P0459

For more details about this annex : see Official Journal of the European Patent Office, No. 12/82

**REFERENCES CITED IN THE DESCRIPTION**

**Patent documents cited in the description**

* JP 5846172 B